# EUROPEAN PATENT SPECIFICATION

(11) **EP 4 145 910 B1**
(45) Date of publication and mention of the grant of the patent: **16.04.2025**
(21) Application number: 21821367.6
(22) Date of filing: 10.05.2021
(51) Int. Cl.: H04W 74/0833, H04W 48/12, H04W 74/00

(54) **RANDOM ACCESS METHOD AND TERMINAL**
DIREKTZUGRIFFSVERFAHREN UND ENDGERÄT
PROCÉDÉ D'ACCÈS ALÉATOIRE ET TERMINAL

(30) Priority: 10.06.2020 CN 202010524863; 24.07.2020 CN 202010725475
(43) Date of publication of application: 08.03.2023
(73) Proprietor: Huawei Technologies Co., Ltd., Longgang District, Shenzhen, Guangdong 518129 (CN)
(72) Inventor: XUE, Yifan, Shenzhen, Guangdong 518129 (CN); XUE, Lixia, Shenzhen, Guangdong 518129 (CN); LIU, Yun, Shenzhen, Guangdong 518129 (CN); WANG, Zhou, Shenzhen, Guangdong 518129 (CN); ZHANG, Jian, Shenzhen, Guangdong 518129 (CN)
(74) Representative: MERH-IP Matias Erny Reichl Hoffmann Patentanwälte PartG mbB
(86) International application number: PCT/CN2021/092600
(87) International publication number: WO 2021/249081

(56) References cited:
- EP-A1- 3 975 658
- CN-A- 108 370 574
- CN-A- 110 337 152
- CN-A- 110 337 152
- CN-A- 110 557 821
- CN-A- 111 034 304
- US-A1- 2019 110 319
- HUAWEI HISILICON: "Motivation for new WI proposal on NR spectrum utilization efficiency enhancements", vol. TSG RAN, no. Chennai, India;, 12 March 2018 (2018-03-12), XP051410368, Retrieved from the Internet <URL:http://www.3gpp.org/ftp/Meetings%5F3GPP%5FSYNC/RAN/Docs/> [retrieved on 20180312]
- CMCC: "Considerations on support of supplementary uplink frequency", vol. RAN WG2, no. Prague, Czech; 20171009 - 20171013, 29 September 2017 (2017-09-29), XP051355856, Retrieved from the Internet <URL:http://www.3gpp.org/ftp/tsg_ran/WG2_RL2/TSGR2_99bis/Docs/> [retrieved on 20170929]

## Description

This application claims priority to Chinese Patent Application No. 202010524863.4, filed with the China National Intellectual Property Administration on June 10, 2020 and entitled "AUXILIARY INFORMATION PROVIDING METHOD AND UE"; and Chinese Patent Application No. 202010725475.2, filed with the China National Intellectual Property Administration on July 24, 2020 and entitled "RANDOM ACCESS METHOD AND TERMINAL".

### TECHNICAL FIELD

This application relates to the communication field, and in particular, to a random access method and a terminal.

### BACKGROUND

In a 4th generation (4th generation, 4G) communication system and a 5th generation (5th generation, 5G) communication system, one cell usually includes one uplink carrier and one downlink carrier. A terminal device receives a downlink signal on the downlink carrier, and sends an uplink signal on the uplink carrier.

A frequency band deployed for a 5G new radio (new radio, NR) system is higher than that for a 4G long term evolution (long term evolution, LTE) system. A characteristic of electromagnetic wave attenuation is that a higher frequency indicates greater attenuation. Therefore, compared with an LTE signal, an NR signal has greater attenuation. In other words, when attenuation degrees of signals sent by a base station or a terminal are the same, coverage of an NR cell is smaller than coverage of an LTE cell. In addition, a transmit power of a macro base station on a downlink differs greatly from that of a terminal on an uplink. The macro base station can perform transmission at a power of 100-odd watt, but a transmit power of a mobile phone is usually only at a milliwatt level. This leads to unbalanced uplink coverage and downlink coverage.

To improve uplink coverage of the NR cell, a supplementary uplink (supplementary uplink, SUL) carrier is introduced in NR. That is, an additional uplink carrier is introduced to a cell, and the carrier is in a low frequency band. This can improve uplink coverage.

However, advancing intelligent terminal technologies have led to a dramatic increase of intelligent terminals. It is clear that configuring one SUL for one cell cannot meet a requirement of a terminal device to perform network access.

Document CN 110 337 152 A generally discloses a method for configuring a SUL and a communication device, which relate to the field of communications, and comprise: after a terminal establishes an RRC connection with an access network device on a first SUL, receiving first configuration information of a second SUL from the access network device; enabling the terminal to initiate random access on a second SUL, the frequency point of the second SUL being different from the frequency point of the first SUL.

Document US 2019/110319 A1 generally discloses techniques for ordering a plurality of potential base stations to serve a user equipment on a supplemental uplink and providing random access channel (RACH) configuration parameters for each of the plurality of potential base stations to the user equipment. Certain aspects provide a method for wireless communication. The method generally includes communicating, by a user equipment (UE), with a first base station (BS) on a downlink on a first frequency band. The method further includes receiving, by the UE from the first BS, a list comprising RACH configuration parameters for each of a plurality of BSs. The method further includes selecting a second BS from the plurality of BSs based on an ordering of the plurality of BSs in the list and performing a RACH procedure with the second BS.

### SUMMARY

Embodiments of this application provide a random access method and a terminal. The method is applied to a communication system, and the communication system includes a network device and a terminal. The network device configures a plurality of SULs in one cell, and sends configuration information of the plurality of SULs to the terminal. After receiving the configuration information of the plurality of SULs, the terminal may select, based on the configuration information, one SUL from the plurality of SULs to initiate random access. This improves uplink coverage. In particular, embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide a random access method, a corresponding terminal, a computer-readable storage medium and a chip.

Any embodiment, aspect, example or implementation not claimed is only presented as information.

### BRIEF DESCRIPTION OF DRAWINGS

FIG. 1 is a schematic diagram of a scenario of a random access method;
FIG. 2 is a schematic diagram of an example scenario of a communication system according to this application;
FIG. 3 is a schematic diagram of an example scenario of a random access method according to this application;
FIG. 4 is a schematic flowchart of an embodiment of a random access method according to this application;
FIG. 5A is a schematic diagram of 4-step random access according to this application:
FIG. 5B is a schematic diagram of 2-step random access according to this application:
FIG. 6 is a schematic diagram of an SUL slot resource according to this application:
FIG. 7 is a schematic diagram of a slot position of an earliest available SUL RACH resource according to this application;
FIG. 8 is a schematic flowchart of another embodiment of a random access method according to application;
FIG. 9 is a schematic diagram of an example structure of an apparatus according to this application;
FIG. 10 is a schematic diagram of an example structure of a processing apparatus according to this application; and
FIG. 11 is a schematic diagram of an example structure of a terminal according to this application.

### DESCRIPTION OF EMBODIMENTS

The following describes technical solutions in embodiments of this application with reference to accompanying drawings in embodiments of this application. It is clear that the described embodiments are merely some but not all of embodiments of this application.

In the specification, claims, and the accompanying drawings of this application, the terms "first", "second" and the like are intended to distinguish between similar objects but do not indicate a particular order or a sequence. It should be understood that the terms used in this way are interchangeable in proper circumstances so that embodiments described herein can be implemented in orders other than the order illustrated or described herein. In addition, the terms "include", "have", and any other variants mean to cover non-exclusive inclusion, for example, a process, method, system, product, or device that includes a list of steps or modules is not necessarily limited to those expressly listed steps or modules, but may include other steps or modules not expressly listed or inherent to such a process, method, product, or device.

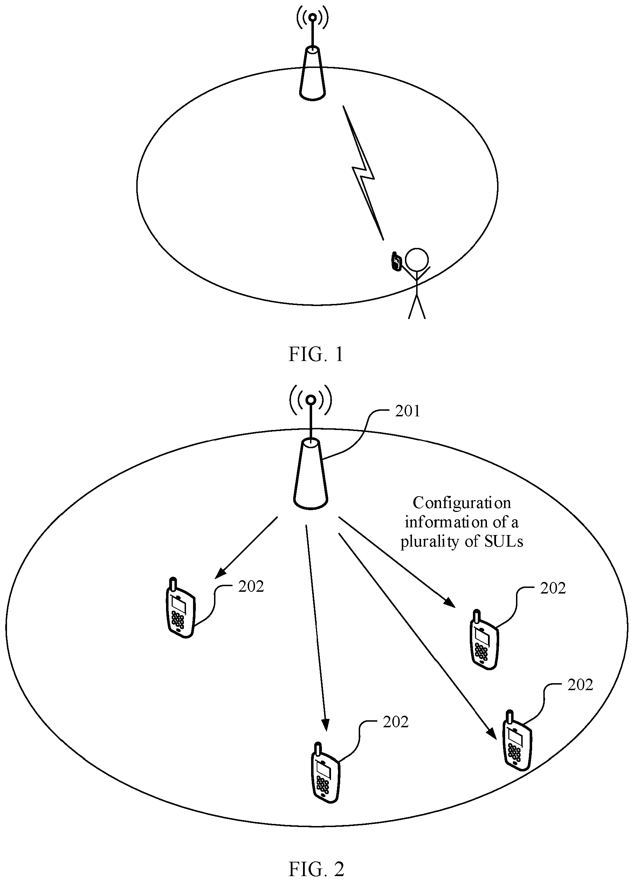

Refer to FIG. 1. In a current 5G communication network cell, a frequency band (for example, a 3.5 GHz frequency band or a 4.9 GHz frequency band) deployed for an NR cell is usually higher than that for 4G LTE. A characteristic of electromagnetic wave attenuation is that a higher frequency indicates greater attenuation. Therefore, compared with an LTE signal, an NR signal has greater attenuation. In other words, when attenuation degrees of signals sent by a network device or a terminal are the same, a distance corresponding to an NR system is shorter than a distance corresponding to an LTE system. In other words, coverage of an NR cell is smaller than coverage of an LTE cell. For example, when a terminal device of a user is at an edge of an NR cell, or when the terminal device is far away from a network device, uplink coverage of the cell and access to a network by the terminal device are limited because an attenuation degree of an NR signal strength is large. This greatly affects user experience.

To resolve the foregoing problem, an embodiment of this application provides a random access method. The method is applied to a communication system. The communication system includes, but is not limited to, a 4th generation (4th generation, 4G) communication system, a 5G communication system, a 6G communication system, a system integrating a plurality of communication systems, or a future evolved communication system. For example, a long term evolution (long term evolution, LTE) system, a new radio (new radio, NR) system, a communication system related to the 3rd generation partnership project (3rd generation partnership project, 3GPP), and another such communication system. In this embodiment of this application, the communication system may be described by using a 5G communication system as an example.

Refer to FIG. 2. The communication system includes a network device 201 and terminals 202. The network device 201 configures a plurality of SULs in a cell. The network device 201 may separately broadcast configuration information of the plurality of SULs. Each terminal 202 in the cell may receive the configuration information of the plurality of SULs. Alternatively, the network device 201 broadcasts a system message, and uses the system message to carry the configuration information of the plurality of SULs. For example, after being powered on, the terminal 202 first needs to perform cell search to obtain a physical cell identity (Physical Cell Identity, PCI) of a current cell. The terminal 202 may be synchronized to the current cell through cell search, and then may read a system message in a broadcast channel (Physical Broadcast channel, PBCH) of the serving cell. The terminal 202 receives the configuration information of the plurality of SULs in the system message.

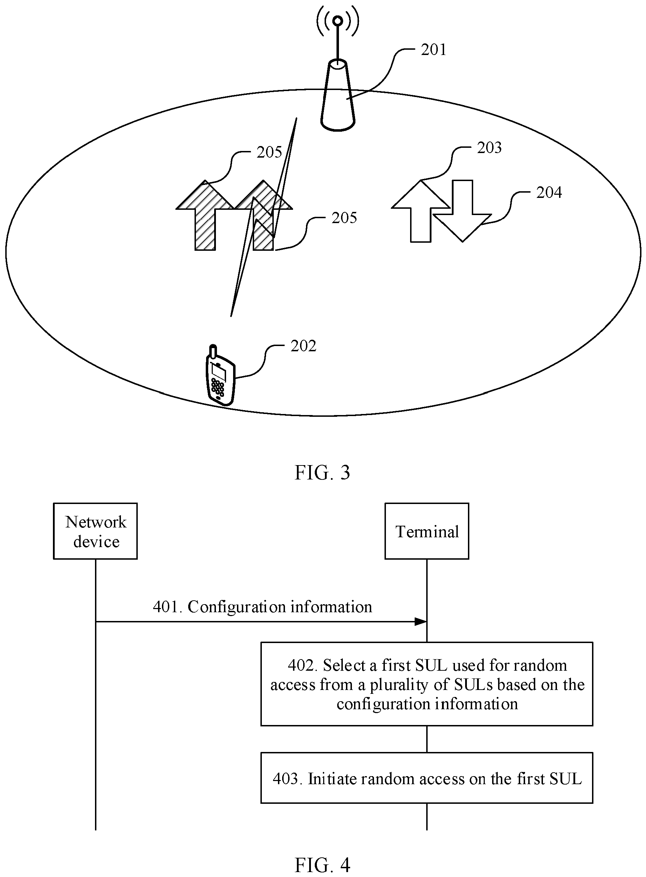

Refer to FIG. 3. The cell covered by the network device 201 includes an uplink (uplink, UL) carrier 203 and a downlink (downlink, DL) carrier 204. To distinguish the uplink carrier 203 from an SUL 205, the uplink carrier 203 is referred to as a normal uplink (normal uplink, NUL) carrier. If the cell is a time division duplex (time division duplex, TDD) cell, center frequencies and bandwidths of the uplink (NUL) carrier 203 and the downlink carrier 204 are the same. Alternatively, there is only one carrier in the TDD cell, and the uplink and downlink are only logically distinguished. For example, when a 2515 to 2615 MHz frequency band is deployed for a TDD cell, uplink and downlink center frequencies are 2565 MHz and bandwidths are 100 MHz. If the cell is a frequency division duplex (frequency division duplex, FDD) cell, the uplink (NUL) carrier 203 and the downlink carrier 204 have different center frequencies (but the frequencies are close). For example, the uplink carrier is in a 1920 to 1935 MHz frequency band, and the downlink carrier is in a 2110 to 2125 MHz frequency band. In this embodiment of this application, the cell may be a TDD cell, or may be an FDD cell. This is not specifically limited. A plurality of SULs 205 are supplementary uplinks of the NUL 203 in a same cell. Frequency bands for the plurality of SULs are usually low. For example, the plurality of SULs may be common deployed LTE frequency bands. A signal loss of a low frequency band is small. This ensures uplink coverage.

An uplink resource in the current cell includes a plurality of SULs and one NUL. The terminal may dynamically select an uplink carrier for initiating random access from the plurality of SULs and the one NUL. For example, the network device may configure a channel quality threshold (which may be referred to as a target threshold), and configuration information includes the target threshold. The terminal receives the target threshold, and determines a channel quality of a current channel. If the channel quality of the current channel is lower than the target threshold, it indicates that the current channel quality is poor, and the terminal may determine to initiate random access on an SUL, and then select one SUL from the plurality of SULs to initiate random access. If the channel quality of the channel is higher than the target threshold, it indicates that the current channel quality is good. In a possible implementation, the terminal may determine to select one uplink carrier from the plurality of SULs or the NUL to initiate random access, and the uplink carrier selected by the terminal may be one of the plurality of SULs, or may be the NUL. In another possible implementation, when the channel quality is higher than the target threshold, the terminal may determine to select the NUL to initiate random access.

In this embodiment of this application, when the cell includes a plurality of SULs, after receiving the system message broadcast by the network device, the terminal may select a first SUL used for random access from the plurality of SULs based on the configuration information of the plurality of SULs, and then initiate random access by using the first SUL. In this application, a network device may configure a plurality of SULs. The plurality of SULs are used to improve uplink coverage of a cell. This resolves a problem that uplink coverage is limited in a scenario in which a terminal is located at a cell edge or the terminal device is far away from the network device. The terminal may select a first SUL from the plurality of SULs to initiate random access. This improves user experience. In addition, because the cell includes the plurality of SULs, a requirement that a large quantity of terminals in the cell can access a network can be met, and a success rate of uplink random access by the plurality of terminals is improved.

In this application, the network device includes, but is not limited to, an evolved NodeB (NodeB, or eNB or e-NodeB, evolved NodeB) in LTE, a base station (a gNodeB or gNB) or a transmission receiving point/transmission reception point (transmission receiving point/transmission reception point, TRP) in NR, a future evolved 3GPP base station, a radio relay node, a wireless backhaul node. A base station may be a macro base station, a micro base station, a picocell base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the network device may be a radio controller, a centralized unit (centralized unit, CU), and/or a distributed unit (distributed unit, DU) in a cloud radio access network (cloud radio access network, CRAN) scenario. In embodiments of this application, for example, the network device is a base station.

In this application, a terminal is a device with a wireless transceiving function. The terminal may be a mobile phone (mobile phone), a tablet computer (Pad), a computer having a wireless transceiving function, a virtual reality (virtual reality, VR) terminal device, an augmented reality (augmented reality, AR) terminal device, a terminal in industrial control (industrial control), an in-vehicle terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application. The terminal may also be referred to as a terminal device, user equipment (user equipment, UE), an access terminal device, an in-vehicle terminal, an industrial control terminal, a UE unit, a UE station, a mobile station, a remote station, a remote terminal device, a mobile device, a UE terminal device, a wireless communication device, a machine terminal, a UE proxy, a UE apparatus, or the like. In embodiments of this application, for example, the terminal is a mobile phone.

For a better understanding of embodiments of this application, terms in this application are first explained.

A parameter indicating a channel quality includes, but is not limited to, a reference signal received power (reference signal received power, RSRP), a reference signal received quality (reference signal received quality, RSRQ), and a signal to interference plus noise ratio (signal to interference plus noise ratio, SINR). The channel quality may be reflected by at least one of the RSRP, the RSRQ, and the SINR. In embodiments of this application, for example, the parameter indicating the channel quality may be the RSRP.

An SUL priority is a level at which an SUL is preferentially selected. A higher SUL priority indicates a higher probability of being selected by a terminal.

An SUL load refers to a quantity of occupied resources on an SUL or a quantity of users using one SUL for communication. A heavier SUL load indicates a larger quantity of occupied resources on an SUL or a larger quantity of users communicating by using the SUL. A quantity of time domain resources is used as an example. Some (for example, two thirds) of time domain resources in one SUL are occupied and used as communication resources in LTE. In an NR system, the rest (one third) of the time domain resources in the SUL that are not occupied may be used as uplink transmission resources. For another example, there are two SULs in one cell: an SUL1 and an SUL2, and bandwidths of the two SULs are the same. If 50 terminals communicate with the network device by using the SUL1, and 100 terminals communicate with the network device by using the SUL2, it can be considered that a load of the SUL2 is heavier than a load of the SUL1.

A quantity of available SUL resources may be a quantity of available slot resources. For example, if time spent on uplink transmission on one SUL accounts for 30% of total time spent on system broadcast, the available resources account for 30% of total resources. Alternatively, the quantity of available resources may be a quantity of random access channel (Random Access Channel, RACH) resources, and the RACH resources may include, but are not limited to, a time domain resource, a frequency domain resource, a code domain resource, a spatial domain resource, and the like.

Slot position of an available SUL RACH resource: In time domain, each SUL includes a plurality of slots, and each available RACH resource has a corresponding slot position. The slot position may be identified by one or more of a frame number, a subframe number, and a slot number. The slot position is a time opportunity that can be used by a terminal to initiate random access.

A band (band) in which an SUL is located is a frequency range that an SUL is in or a center frequency of a frequency spectrum in which the SUL is located. The band in which the SUL is located may be indicated in two possible manners. One is that a base station directly configures a band number (band number) or a band index (band index) of the SUL. The other is that a base station configures a frequency domain position of an SUL center frequency (for example, in a unit of Hz, the configured center frequency may be 725 MHz), and UE may determine a band number or a band index of the SUL based on prestored information.

An embodiment of this application provides a method for selecting one SUL from a plurality of SULs to initiate random access. Refer to FIG. 4. An embodiment of the random access method provided in this application includes the following steps.

Step 401. A terminal receives configuration information sent by a network device, where the configuration information includes information about a plurality of supplementary uplink SUL carriers.

The network device configures the plurality of SULs, and the network device broadcasts the configuration information. The terminal receives the information about the plurality of SULs through the system message.

Optionally, the system message broadcast by the network device includes first information and the configuration information. The first information includes parameter information of each of the plurality of SULs. For example, the parameter information of the SUL may include frequency domain information of the SUL (for example, a band list, a position of a reference resource block (Resource Block, RB), a subcarrier spacing, a maximum transmit power P-max, and whether there is a 7.5 kHz offset), an uplink bandwidth (band width part, BWP) configuration (for example, including a BWP parameter, a random access configuration, a physical uplink shared channel (physical uplink shared channel, PUSCH) configuration, and a physical uplink control channel (physical uplink control channel, PUCCH) configuration), a time alignment timer configuration, and the like.

The configuration information is used to indicate the terminal to select a first SUL used for random access from the plurality of SULs. The configuration information includes at least one piece of parameter information of a channel quality threshold, an SUL priority, an SUL load, a quantity of available SUL resources, a slot position of an available SUL random access channel (random access channel, RACH) resource, or a frequency band in which the SUL is located.

A system message broadcast by a base station includes first information and configuration information. In an example, the first information includes child information related to each SUL, and each piece of child information indicates one SUL. The configuration information includes a plurality of pieces of child configuration information, and each SUL is associated with one piece of child configuration information. In other words, a quantity of the SULs is the same as a quantity of pieces of child configuration information. For example, each SUL is associated with one priority, so that each of the plurality of SULs corresponds to a piece of child configuration information. It may be understood that, in the system message body, the child information indicating each SUL is associated with one piece of child configuration information, so that one SUL corresponds to one piece of child configuration information. The child configuration information may include at least one parameter of a channel quality threshold, a priority, a load, a quantity of available resources, a slot position of an available random access channel (random access channel, RACH) resource, and a band in which the SUL is located. For example, each piece of child configuration information may be in a one-to-one correspondence with each SUL in sequence. For example, one cell has a maximum of N SULs, and the system message may include the following content. SUL-ConfigList is first information of all the SULs and includes a maximum of N pieces of SUL-Config (SUL-Config is child information of an SUL in the first information). In addition, the system message may further include SUL-AccessConfigList. The SUL-AccessConfigList is configuration information of all the SULs, and includes a maximum of N pieces of SUL-AccessConfig (SUL-AccessConfig is child configuration information of one SUL). In this case, both an ith SUL-Config in the N pieces of SUL-Config and an ith SUL-AccessConfig in the N pieces of SUL-AccessConfig correspond to an ith SUL. For example, the message body is as follows.

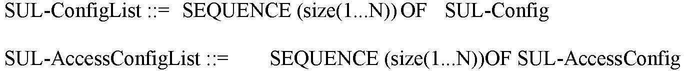

In another example, each piece of child configuration information corresponds to an index of one SUL, the configuration information includes an index of each of the plurality of SULs, and the index of the SUL corresponds to one piece of child configuration information (for example, a priority). For example, if there are three SULs, indexes of the three SULs are "1", "2", and "3" respectively. A priority corresponding to the index "1" is a first priority, a priority corresponding to the index "2" is a second priority, and a priority corresponding to the index "3" is a third priority. An example of the configuration information is as follows. For example, one cell has a maximum of N SULs, and the system message may include the following content. SUL-ConfigList is first information of all the SULs and includes a maximum of N pieces of SUL-Config (SUL-Config is child information of an SUL in the first information). In addition, the system message may further include SUL-AccessConfigList, which is configuration information of all the SULs and includes a maximum of N pieces of SUL-AccessConfig (SUL-AccessConfig is child configuration information of one SUL). In this case, each SUL-Config includes one SUL-Index, and the SUL-Index defines an index of a current SUL. Each SUL-AccessConfig also includes one SUL-Index, and the SUL-Index indicates an SUL corresponding to current configuration information. Each SUL-AccessConfig further includes one SUL-Priority, and the SUL-Priority indicates a priority of a current SUL. For example, the message body is as follows.

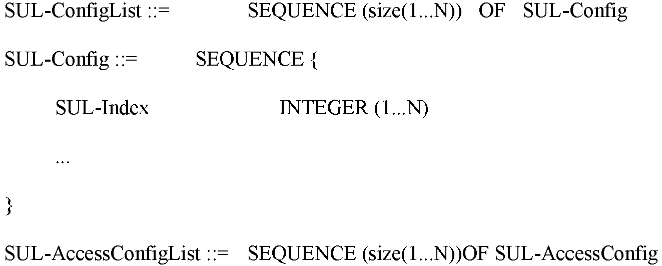

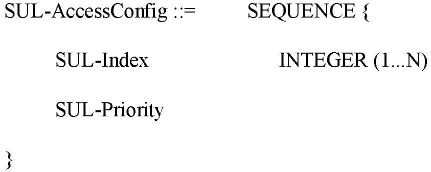

In another example, each piece of child configuration information is a part of child information of a corresponding SUL. That is, the configuration information is a part of the first information. An example is described as follows. One cell has a maximum of N SULs, and the system message may include the following content. SUL-ConfigList is first information of all the SULs and includes a maximum of N pieces of SUL-Config (SUL-Config is child information of an SUL in the first information). Each piece of SUL-Config includes one piece of SUL-AccessConfig, and the SUL-AccessConfig is child configuration information of a current SUL. For example, the message body is as follows.

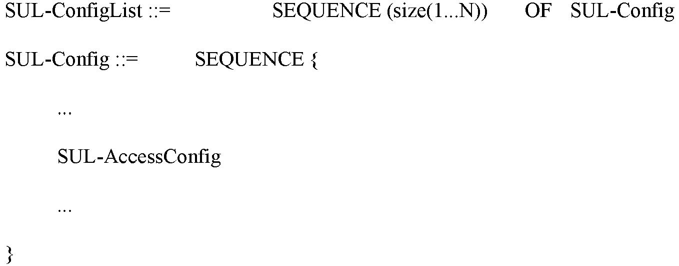

Step 402. The terminal selects a first SUL used for random access from the plurality of SULs based on the configuration information.

The configuration information includes first parameter information and/or second parameter information.

First, M second SULs are determined based on the first parameter information, where the first parameter information is at least one of the channel quality threshold, the SUL priority, the SUL load, the quantity of available SUL resources, the slot position of the available SUL random access channel RACH resource, and the band in which the SUL is located, and M is an integer greater than or equal to 1, for example, M is 1, 2, or 3. M is a quantity of qualified SULs selected by the terminal from the plurality of SULs based on the first parameter information. For example, the first parameter information is the channel quality threshold. First, the terminal receives a downlink signal, and determines a first information value based on the downlink signal. The first information value is an RSRP value of a current channel. It may be understood that the terminal receives the downlink signal, and the first information value indicates a channel quality of a downlink channel. The terminal may estimate an uplink channel quality based on the downlink channel quality. For example, the terminal estimates the channel quality of the uplink channel based on a difference between a band in which the downlink channel is located and a band in which the uplink channel is located and the channel quality of the downlink channel. Then, for each SUL, the terminal compares a current RSRP value with an RSRP threshold corresponding to each SUL. To be specific, the current RSRP value is compared with an RSRP threshold 1, the current RSRP value is compared with an RSRP threshold 2, and the current RSRP value is compared with an RSRP threshold 3. Finally, the terminal determines the M second SULs based on the first information value and the first channel quality threshold that corresponds to each SUL. For example, when the first information value (the current RSRP value) is less than the threshold 3 (a target channel quality threshold), the terminal determines that an SUL3 is the first SUL used for random access, that is, M is 1. In this case, the second SUL is the first SUL used for random access. When the first information value is less than the threshold 2 and greater than the threshold 3, the terminal can perform access by using an SUL2 or an SUL3, that is, M is 2, which represents that two second SULs can be used as candidate resources to be selected as the first SUL.

If M equals 1, the second SUL is the first SUL. In other words, the first SUL can be selected from the plurality of SULs based on only one piece of parameter information, which is described in the following first possible implementation.

If M is greater than 1, the first SUL used for random access is determined from the M second SULs based on the second parameter information, where the second parameter information includes at least one piece of parameter information of the channel quality threshold, the SUL priority, the SUL load, the quantity of available SUL resources, the slot position of the available SUL random access channel RACH resource, and the band in which the SUL is located, and the first parameter information and the second parameter information are different. For example, the first parameter information is the channel quality threshold, and the second parameter information is parameter information other than the channel quality threshold. For example, the second parameter information is the priority. A second possible implementation is described as follows.

Alternatively, when M is greater than 1, the terminal may not select the first SUL from the M second SULs based on the second parameter information, but the first SUL may be preset. For example, the terminal randomly selects the first SUL from the M second SULs, or selects an SUL with a smallest (or largest) SUL index as the first SUL. A specific manner is not limited.

In the first possible implementation, the configuration information includes one piece of parameter information, and the first parameter information is any piece of parameter information of the channel quality threshold, the priority, the load, the quantity of available resources, the slot position of the available random access channel RACH resource, and the band in which the SUL is located.

The terminal may directly select the first SUL used for random access from the plurality of SULs based on one piece of parameter information.

In the second possible implementation, the configuration information includes at least two pieces of parameter information (that is, the first parameter information and the second parameter information), and the first SUL is selected from the plurality of SULs based on a combination of at least two pieces of parameter information.

For example, the first parameter information includes at least one piece of parameter information of the channel quality threshold, the priority, the load, the quantity of available resources, the slot position of the available random access channel RACH resource, and the band in which the SUL is located. The second parameter information includes at least one piece of parameter information of the channel quality threshold, the priority, the load, the quantity of available resources, the slot position of the available random access channel RACH resource, and the band in which the SUL is located.

First, the terminal selects at least two second SULs from the plurality of SULs as candidate resources based on the first parameter information (for example, the channel quality threshold).

Then the terminal determines the first SUL used for random access from the at least two second SULs based on the second parameter information (for example, the priority).

When the terminal cannot select the first SUL from the plurality of SULs based on one piece of parameter information, the terminal may select the first SUL from the plurality of SULs based on different pieces of parameter information. To be specific, the terminal may first select candidate resources from the plurality of SULs based on the first parameter information, and then select the first SUL used for random access from the candidate resources.

For example, the configuration information may alternatively include three or more pieces of parameter information. Each piece of parameter information includes at least one of the channel quality threshold, the priority, the load, the quantity of available resources, the slot position of the available random access channel RACH resource, and the band in which the SUL is located. Different pieces of parameter information have different content. Based on the pieces of parameter information, the terminal may gradually narrow down a selection range formed by the plurality of SULs, and finally determine the first SUL used for random access.

For example, in the example in which the first SUL is selected from the plurality of SULs based on the combination of the plurality of pieces of parameter information, the network device may indicate a priority of each piece of parameter information. For example, the first parameter information is the channel quality threshold, the second parameter information is the load, third parameter information is the quantity of available resources, where a priority of the first parameter information is higher than a priority of the second parameter information, and the priority of the second parameter information is higher than a priority of the third parameter information. The terminal device selects the first SUL from the plurality of SULs based on a priority sequence of the pieces of parameter information. For example, the terminal first selects a plurality of second SULs from the plurality of SULs based on channel quality parameters, then selects a plurality of third SULs from the plurality of second SULs based on loads, and finally selects the first SUL used for random access from the plurality of third SULs based on quantities of available resources. Certainly, if the terminal device selects one SUL from the plurality of second SULs as the first SUL based on the loads, selection does not need to be further performed based on the third parameter information. Optionally, the priority of each piece of parameter information may be determined by the terminal device. In other words, the terminal device determines priorities of the plurality of pieces of parameter information. The terminal device selects the first SUL from the plurality of SULs based on a descending sequence of the priorities of the pieces of parameter information.

Step 403. The terminal initiates random access on the first SUL.

The configuration information further includes a second channel quality threshold, and the second channel quality threshold is used by the terminal to determine whether to perform random access in two steps or four steps. The second channel quality threshold may be an RSRP threshold, an RSRQ threshold, an SINR threshold, or the like. An example in which the second channel quality threshold is the RSRP threshold is used for descriptions.

The terminal receives the downlink signal, and determines the first information value based on the downlink signal, where the first information value represents a channel quality. For example, the terminal may receive a downlink signal by using a downlink (DL) carrier in a cell, where the first information value may be an RSRP, an RSRQ, an SINR, or the like. An example in which the first information value is a first RSRP is used.

The terminal compares the first information value with the second channel quality threshold. The second channel quality threshold is configured by the network device. When the first information value is greater than the second channel quality threshold, it indicates that a current channel quality is good. When the current channel quality is good, the terminal accesses the first SUL in two steps. When the first information value is less than or equal to the second channel quality threshold, it indicates that the current channel quality is poor, and the terminal may access the first SUL in four steps. In embodiments of this application, 2-step access or 4-step access may be performed. This is not specifically limited. When the channel quality is poor, the 4-step access method is used to increase a random access success rate. When the channel quality is good, by using the 2-step access method, data transmission steps can be reduced and random access efficiency can be improved.

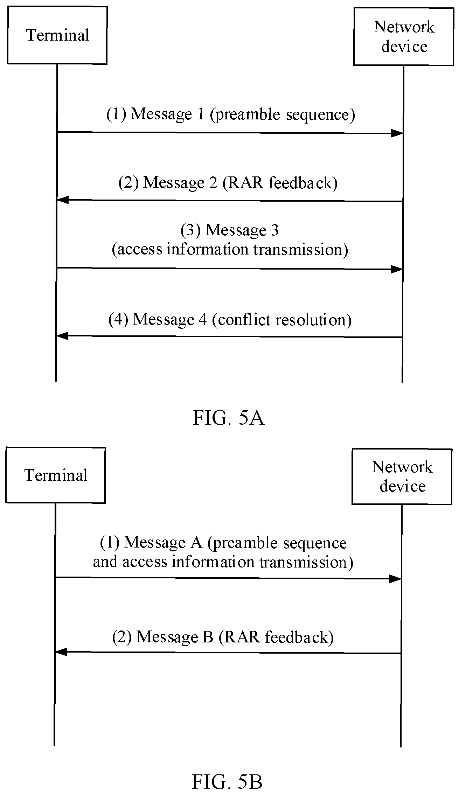

Refer to FIG. 5A. The 4-step random access method includes the following four steps.
(1) The terminal sends message 1 (Msg1) to the network device, that is, the terminal sends a random access preamble sequence to the network device.

After determining the first SUL, the terminal selects a preamble sequence on the first SUL, to notify the network device that there is a random access request. After determining an initial transmit power, the terminal initiates random access on a physical random access channel (physical random access channel, PRACH).

(2) The network device feeds back message 2 (Msg2) to the terminal. To be specific, the network device feeds back a random access response (random access response, RAR) to the terminal, and the response signal is transmitted on a physical downlink shared channel (physical downlink shared channel, PDSCH).

The base station receives the preamble information sent by the terminal. If successfully detecting the preamble sequence sent by the terminal, the network device sends the RAR message to the terminal.

(3) The terminal sends message 3 (Msg3) to the network device, where information included in Msg3 varies in different situations.

After receiving the RAR message, the terminal sends an identifier of the terminal to the network device through a physical uplink shared channel (physical uplink shared channel, PUSCH). The channel is allocated by the network device to the terminal in step 2. The terminal may send a small amount of data or signaling messages (that is, access information transmission) on an obtained uplink resource.

(4) The network device sends message 4 (Msg4) to the terminal, where information included in Msg4 varies in different situations.

For example, Msg4 may be a message indicating successful conflict resolution. After the terminal receives Msg4, the terminal can participate in resource scheduling and send data.

Refer to FIG. 5B. The 2-step random access method includes the following two steps.

### (1) The terminal sends message A (MsgA) to the network device.

MsgA is equivalent to Msg1 and Msg3 in the 4-step random access method in FIG. 5A.

After determining the first SUL, the terminal selects a preamble sequence on the first SUL to perform random access, that is, the terminal sends the preamble sequence and access information to the network device.

### (2) The network device feeds back MsgB to the terminal.

The network device sends a RAR message to the terminal. If the terminal receives the RAR message, it indicates that random access succeeds, in other words, data transmission can be performed.

If the base station is configured to support both 2-step (2-step) and 4-step (4-step) random access, the base station may configure a channel quality threshold (for example, an RSRP threshold). When an RSRP of a synchronization signal and PBCH block (synchronization signal and PBCH block, SSB) is higher than the RSRP threshold, UE may choose to perform 2-step access. An objective is to ensure, by setting the RSRP threshold (for example, msg-RSRP-Threshold or msg-RSRP-Threshold SUL), that the terminal performs 2-step access when a channel condition is good, so as to increase a probability that both a preamble and a PUSCH in MsgA are correctly received.

In embodiments of this application, the network device configures the plurality of SULs, and the terminal may select the first SUL from the plurality of SULs as a random access resource based on the configuration information. The terminal selects a preamble sequence on the first SUL and sends the preamble sequence on the first SUL to the network terminal. If there are a large quantity of terminals, different terminals may select different SULs to initiate random access. In other words, the terminals send preambles on different SUL resources. This avoids a conflict caused when the plurality of terminals send a same preamble on a same radio resource.

It should be noted that, in embodiments of this application, the configuration information may not be broadcast by using the system message, the configuration information is information configured by the network device for the terminal, and the network device sends the configuration information to the terminal by unicast. For example, in an application scenario, when the terminal has accessed a network, in other words, when the terminal and the network device are connected, the network device sends the configuration information of the plurality of SULs to the terminal. When the network device and the terminal are disconnected and need to be reconnected, the terminal needs to initiate random access again. In this case, the terminal may select the first SUL used for random access from the plurality of SULs based on the configuration information received in advance.

Optionally, for the first possible implementation of step 402, in other words, when M is 1, the second SUL is the first SUL. In other words, the terminal directly selects the first SUL from the plurality of SULs based on any piece of parameter information of the channel quality threshold, the SUL priority, the SUL load, the quantity of available SUL resources, the slot position of the available RACH resource, and the band in which the SUL is located (that is, the first parameter information or the second parameter information).

Example 1: The configuration information includes a channel quality threshold of each SUL.

Example 2: The configuration information includes a priority of each SUL.

Example 3: The configuration information includes a load of each SUL.

Example 4: The configuration information includes a quantity of available resources on each SUL.

Example 5: The configuration information includes a slot position of each available RACH resource.

Example 6: The configuration information includes a band in which each SUL is located.

The foregoing six examples are explained in the following descriptions.

Example 1: The configuration information includes child configuration information corresponding to each SUL in the plurality of SULs. The child configuration information is the first channel quality threshold, where the first channel quality threshold is used by the terminal device to determine whether an SUL corresponding to the first channel quality threshold can be used for random access.

An example in which the first channel quality threshold is an RSRP threshold is used, and each SUL corresponds to one RSRP threshold.

For example, three SULs are broadcast in the system message: an SUL1, an SUL2, and an SUL3. Different SULs may correspond to different RSRP thresholds. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3.

First, the terminal receives the downlink signal, and determines the first information value based on the downlink signal. The first information value is an RSRP value of a current channel. It may be understood that the terminal receives the downlink signal, and the first information value indicates a channel quality of a downlink channel. The terminal may estimate an uplink channel quality based on the downlink channel quality. For example, the terminal estimates the channel quality of the uplink channel based on a difference between a band in which the downlink channel is located and a band in which the uplink channel is located and the channel quality of the downlink channel.

Then, for each SUL, the terminal compares a current RSRP value with an RSRP threshold corresponding to each SUL. To be specific, the current RSRP value is compared with the RSRP threshold 1, the current RSRP value is compared with the RSRP threshold 2, and the current RSRP value is compared with the RSRP threshold 3.

Finally, the terminal determines the first SUL based on the first information value and the first channel quality threshold that corresponds to each SUL. If the first channel value is less than a target channel quality threshold in the plurality of first channel quality thresholds, an SUL corresponding to the target channel quality threshold is selected as the first SUL.

For example, when the first information value (the current RSRP value) is less than the threshold 3 (the target channel quality threshold), the terminal determines that the SUL3 is the first SUL used for random access. When the first information value is less than the threshold 2 and greater than the threshold 3, the terminal can perform access by using the SUL2 or the SUL3. In other words, the first SUL is the SUL2 or the SUL3. The terminal may randomly select one SUL from the SUL2 or the SUL3 as the first SUL. When the first information value is less than the threshold 1 and greater than the threshold 2, the terminal can perform access by using the SUL1, the SUL2, or the SUL3. In other words, the first SUL is the SUL1, the SUL2, or the SUL3. The terminal may select, through equiprobability-based random selection, one SUL from the SUL1, the SUL2, or the SUL3 as the first SUL used for random access. When the RSRP value is greater than the threshold 1, the terminal can perform access by using the SUL1, the SUL2, the SUL3, or an NUL.

Optionally, one channel quality threshold may correspond to a plurality of SULs. In other words, there is a possibility that at least two of the plurality of SULs correspond to a same channel quality threshold. For example, the base station configures three SULs, and configures an RSRP threshold corresponding to an SUL1 as a threshold 1, and configures RSRP thresholds corresponding to an SUL2 and an SUL3 as a threshold 2, where the threshold 1 is greater than the threshold 2. When the current RSRP value determined by the terminal is less than the threshold 2, the terminal can perform access by using the SUL2 or the SUL3, the first SUL is the SUL2 or the SUL3, and the terminal may randomly select the SUL2 or the SUL3 as the first SUL used for random access. When the current RSRP value determined by the terminal is less than the threshold 1 and greater than the threshold 2, the terminal can perform access by using the SUL1, the SUL2, or the SUL3, in other words, the first SUL is the SUL1, the SUL2, or the SUL3. When the RSRP value is greater than the threshold 1, the terminal can perform access by using the SUL1, the SUL2, the SUL3, or an NUL.

In this example, one cell supports a plurality of SULs, so that uplink coverage is improved. A base station configures the plurality of SULs. A terminal can select a first SUL used for random access from the plurality of SULs based on a current channel quality and a channel quality threshold corresponding to each SUL. The terminal selects the first SUL from the plurality of SULs based on a channel quality. This ensures a random access success rate of the terminal.

Example 2: The configuration information includes the priority of each of the plurality of SULs.

The configuration information includes a plurality of pieces of child configuration information, and each SUL corresponds to one piece of child configuration information. In this example, the child configuration information is the priority.

First, the terminal compares priorities corresponding to the plurality of SULs.

For example, two SULs are configured in a configuration message: an SUL1 and an SUL2. A priority of the SUL1 is a first priority, and a priority of the SUL2 is a second priority. The first priority is higher than the second priority.

Then, the terminal determines the first SUL based on the priority of each of the plurality of SULs, where the first SUL is an SUL with a highest priority in the plurality of SULs.

The first priority is higher than the second priority, and the terminal selects the SUL1 corresponding to the first priority as the first SUL used for random access.

In this example, the plurality of SULs are configured in one cell, and the plurality of SULs improve uplink coverage of the cell. Each SUL has a corresponding priority. The terminal may select the first SUL used for random access from the plurality of SULs based on the priorities in the configuration information.

Example 3: The configuration information includes the load of each of the plurality of SULs.

First, the terminal compares a plurality of loads corresponding to the plurality of SULs.

For example, when the base station indicates a load of an SUL, the load of the SUL may be represented by an access control parameter value. The access control parameter value ranges from 0 to 1. It may be understood that a smaller access control parameter value indicates a heavier current SUL load, and a larger access control parameter value indicates a lighter current SUL load. The terminal may select an SUL corresponding to a large control parameter value as the first SUL used for random access.

For example, the base station configures three SULs: an SUL1, an SUL2, and an SUL3. The SUL1 corresponds to an access control parameter value p (for example, 0.4), the SUL2 corresponds to an access control parameter value q (for example, 0.3), and the SUL3 corresponds to an access control parameter value w (for example, 0.2), where the access control parameter value p>the access control parameter value q>the access control parameter value w.

Then, the terminal determines the first SUL based on the load of each of the plurality of SULs, where the first SUL is an SUL with the lightest load in the plurality of loads.

The terminal selects the SUL1 corresponding to the access control parameter 1 as the first SUL used for random access.

In this example, the plurality of SULs are configured in one cell, and the plurality of SULs improve uplink coverage of the cell. Each SUL corresponds to a load. The terminal may select the first SUL used for random access from the plurality of SULs based on the load of each SUL. In this way, a balanced load of each SUL can be ensured, and random access congestion can be avoided.

Example 4: The configuration information includes the quantity of available resources on each of the plurality of SULs.

In a manner, the quantity of available resources is a quantity of available uplink slot resources, or the quantity of available resources may be represented by a ratio of available slot resources.

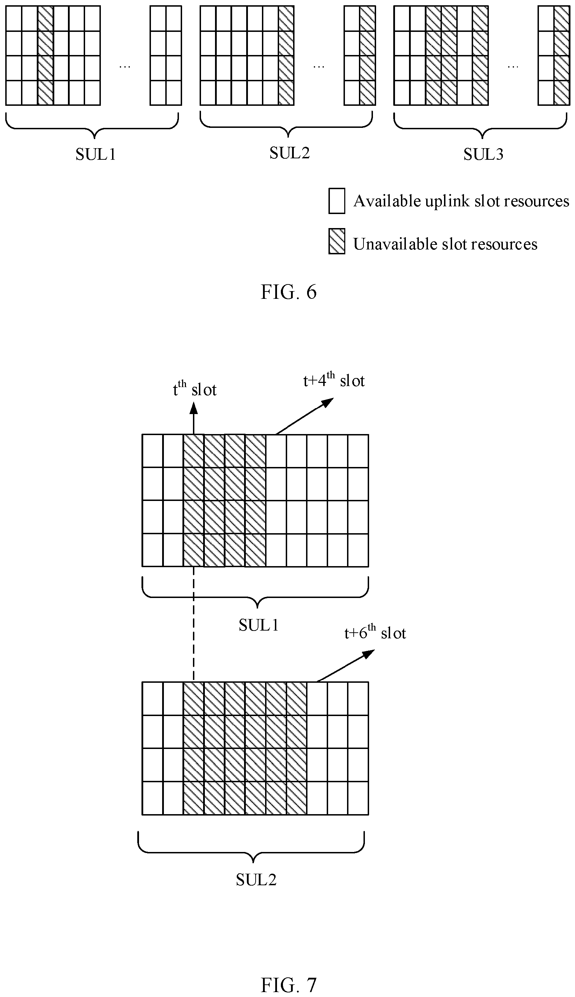

Refer to FIG. 6. In time domain, each SUL includes a plurality of slots. When the SUL is deployed on an LTE frequency band, some slots on the SUL may be allocated in an LTE system for LTE communication, and the other slots may be used as uplink random access resources.

First, the terminal compares quantities of available slot resources corresponding to the plurality of SULs.

For example, the network device configures three SULs: an SUL1, an SUL2, and an SUL3. A quantity of available slot resources of the SUL1 is a quantity a (or an available slot resource ratio a), a quantity of available slot resources of the SUL2 is a quantity b (or an available slot resource ratio b), and a quantity of available slot resources of the SUL3 is a quantity c (or an available slot resource ratio c).

For example, the quantity a>the quantity b>the quantity c.

Then, the terminal determines the first SUL based on the quantity of available slot resources of each of the plurality of SULs, where the first SUL is an SUL corresponding to a maximum quantity in the quantities of available resources, or the first SUL is an SUL corresponding to a maximum ratio in ratios of available resources.

For example, the terminal selects the SUL1 corresponding to the quantity a of available slot resources as the first SUL used for random access.

In another manner, the quantity of available resources may be a quantity of available RACH resources, and the available RACH resources include, but are not limited to, a time domain resource, a frequency domain resource, a code domain resource, a spatial domain resource, and the like.

First, the terminal compares quantities of available RACH resources corresponding to the plurality of SULs.

For example, the SUL1 has a quantity m of available RACH resources m (for example, 640 orthogonal RACH resources), the SUL2 has a quantity n of available RACH resources (for example, 320 orthogonal RACH resources), and the SUL3 has a quantity s of available RACH resources (for example, 160 orthogonal RACH resources), where the quantity m of available RACH resources>the quantity n of available RACH resources>the quantity s of available RACH resources.

Then, the terminal determines the first SUL based on the quantity of available RACH resources of each of the plurality of SULs, where the first SUL is an SUL corresponding to a maximum quantity in the plurality of quantities of available RACH resources. That is, the terminal selects the SUL1 corresponding to the quantity a of available RACH resources as the first SUL.

In this example, the plurality of SULs are configured in one cell, and the plurality of SULs improve uplink coverage of the cell. Each SUL corresponds to a quantity of available resources. The terminal may select an SUL with a large quantity of available resources as the first SUL used for random access from the plurality of SULs based on the quantity of available resources of each SUL. Signal interference between terminals that select the first SUL for random access in the cell is reduced.

Example 5: The configuration information includes the slot position of the available RACH resource of each of the plurality of SULs.

For example, the base station configures two SULs: an SUL1 and an SUL2.

The terminal selects an SUL corresponding to an earliest first slot position as the first SUL.

For example, a slot position of an earliest available RACH resource in the SUL1 is a third slot position, and a slot position of an earliest available RACH resource in the SUL2 is a fifth slot position.

The terminal selects the SUL1 corresponding to the third slot position as the first SUL used for random access.

Optionally, first, the terminal determines a first time unit that has a random access requirement (or that is to initiate random access).

Refer to FIG. 7. The first time unit is a tth slot.

Then, the terminal selects an SUL corresponding to an earliest first slot position after the first time unit (the tth slot) as the first SUL.

After the first time unit, a slot position of an earliest available RACH resource in the SUL1 is a (t+4)th slot position, and a slot position of an earliest available RACH resource in the SUL2 is a (t+6)th slot position, where x is an integer greater than or equal to 3, and y is an integer greater than or equal to 5.

The terminal selects the SUL1 corresponding to the (t+4)th slot position as the first SUL used for random access.

Alternatively, it may be understood that for each SUL, the terminal determines a slot interval between the first time unit and a first slot position of a next available RACH resource. For example, in the SUL1, an interval between the tth slot and the slot position of the earliest available RACH resource is three slots, and in the SUL2, an interval between the tth slot and the slot position of the earliest available RACH resource is five slots. The terminal selects an SUL corresponding to a shortest slot interval (three interval slots) in a plurality of slot intervals as the first SUL.

In this example, the plurality of SULs are configured in one cell, and the plurality of SULs are used to improve uplink coverage of the cell. The terminal may select the SUL corresponding to the slot position of the earliest available RACH resource as the first SUL. In this way, a random access delay is reduced.

Example 6: The configuration information includes the band in which each of the plurality of SULs is located.

For example, the base station configures two SULs: an SUL1 and an SUL2. A band in which the SUL1 is located is a band d, and a band in which the SUL2 is located is a band e.

First, for each SUL, the terminal determines a maximum transmit power of the terminal device based on the band in which the SUL is located.

The terminal determines the maximum transmit power of the terminal device based on the band d in which the SUL1 is located. The terminal may determine the maximum transmit power by querying a table indicating correspondences between bands and maximum transmit powers. The table indicating the correspondences between bands and maximum transmit powers is preconfigured before delivery of the terminal.

For example, the terminal determines, based on correspondences between bands and maximum transmit powers, a maximum transmit power 1 corresponding to the band d and a maximum transmit power 2 corresponding to the band e, where the maximum transmit power 1 is greater than the maximum transmit power 2.

Then, the terminal determines the first SUL based on the maximum transmit powers, where the first SUL is an SUL corresponding to a largest value in the plurality of maximum transmit powers.

For example, a largest value of the maximum transmit power 1 and the maximum transmit power 2 is the maximum transmit power 1. The terminal selects the SUL1 corresponding to the maximum transmit power 1 as the first SUL used for random access.

In this example, the plurality of SULs are configured in one cell, and the plurality of SULs improve uplink coverage of the cell. The terminal can determine the maximum transmit powers of the terminal based on bands in which the SULs are located, and determine the first SUL based on the maximum transmit powers of the terminal device. The first SUL selected by the terminal corresponds to a largest value of the maximum transmit powers. This increases a random access success rate and ensures strength of a signal sent by the terminal.

In the following descriptions, the foregoing examples are combined, and the first SUL used for random access is selected from the plurality of SULs based on a combination of at least two pieces of parameter information. For the second possible implementation of step 402, that is, when M is greater than 1, the configuration information includes at least the first parameter information and the second parameter information, and the terminal selects the first SUL from the plurality of SULs based on the first parameter information and the second parameter information. If the first parameter information is the channel quality threshold, the second parameter information may include at least one piece of parameter information of the SUL priority, the SUL load, the quantity of available SUL resources, the slot position of the available SUL random access channel RACH resource, and the band in which the SUL is located. For example, there are Example combination 1 to Example combination 6.

If the first parameter information is the priority, the second parameter information includes at least one piece of parameter information of the channel quality threshold, the SUL load, the quantity of available SUL resources, the slot position of the available SUL random access channel RACH resource, and the band in which the SUL is located.

The following describes example combinations of the first parameter information and second parameter information that are included in the configuration information.

Example combination 1: a combination of the foregoing Example 1 and Example 2, to be specific, the first parameter information is the channel quality threshold, and the second parameter information is the priority.

Example combination 2: a combination of the foregoing Example 1 and Example 3, to be specific, the first parameter information is the channel quality threshold, and the second parameter information is the load.

Example combination 3: a combination of the foregoing Example 1 and Example 4, to be specific, the first parameter information is the channel quality threshold, and the second parameter information is the quantity of available resources.

Example combination 4: a combination of the foregoing Example 1 and Example 5, to be specific, the first parameter information is the channel quality threshold, and the second parameter information is the slot position of the available RACH resource.

Example combination 5: a combination of the foregoing Example 1 and Example 6, to be specific, the first parameter information is the channel quality threshold, and the second parameter information is the band in which the SUL is located.

Example combination 6: a combination of the foregoing Example 1, Example 3, and Example 4, to be specific, the first parameter information is the channel quality threshold, and the second parameter information includes the load and the quantity of available resources.

Example combination 7: a combination of the foregoing Example 2 and Example 3, to be specific, the first parameter information is the priority, and the second parameter information is the load.

The following describes the foregoing seven example combinations.

Example combination 1 is the combination of the foregoing Example 1 and Example 2. In this combination, the first parameter information is the channel quality threshold, and the second parameter information is the priority.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3. A priority of the SUL1 is a first priority, a priority of the SUL2 is a second priority, and a priority of the SUL3 is a third priority. The first priority is higher than the second priority, and the second priority is higher than the third priority.

The terminal selects at least two second SULs from the plurality of SULs as the candidate resources based on a channel quality threshold corresponding to each SUL.

First, the terminal receives the downlink signal, and determines the first information value based on the downlink signal. For example, the first information value is a current RSRP value. The first information value represents a current channel quality.

Then, for each SUL, the terminal compares the current RSRP value with an RSRP threshold corresponding to each SUL. To be specific, the current RSRP value is compared with the RSRP threshold 1, the current RSRP value is compared with the RSRP threshold 2, and the current RSRP value is compared with the RSRP threshold 3.

For example, when the first information value is less than the RSRP threshold 2 and greater than the RSRP threshold 3, the terminal selects two second SULs from the three SULs as the candidate resources, for example, the SUL2 and the SUL3 are selected as the candidate resources.

The terminal selects the first SUL used for random access from the plurality of SULs based on a priority corresponding to each of the at least two second SULs.

A priority of the SUL2 is higher than a priority of the SUL3, and the terminal determines the SUL3 corresponding to the highest priority as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the first SUL used for random access from the plurality of second SULs based on the priority corresponding to each second SUL, and selects the first SUL used for random access from the plurality of SULs based on the channel quality threshold and the priority of each SUL.

Example combination 2 is the combination of the foregoing Example 1 and Example 3. In this combination, the first parameter information is the channel quality threshold, and the second parameter information is the load.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3. The SUL1 corresponds to an access control parameter value p (for example, 0.4), the SUL2 corresponds to an access control parameter value q (for example, 0.3), and the SUL3 corresponds to an access control parameter value w (for example, 0.2), where the access control parameter value p>the access control parameter value q>the access control parameter value w. A smaller access control parameter value indicates a heavier current SUL load, and a larger access control parameter value indicates a lighter current SUL load.

The terminal selects at least two second SULs from the plurality of SULs as the candidate resources based on a channel quality threshold corresponding to each SUL.

First, the terminal receives the downlink signal, and determines the first information value based on the downlink signal. The first information value represents a current channel quality. For example, the first information value is a current RSRP value.

Then, for each SUL, the terminal compares the first information value (the current RSRP value) with an RSRP threshold corresponding to each SUL. The terminal compares the current RSRP value with the RSRP threshold 1, the RSRP threshold 2, and the RSRP threshold 3.

For example, when the first information value is less than the RSRP threshold 2 and greater than the RSRP threshold 3, the terminal selects two second SULs from the three SULs as the candidate resources, for example, the SUL2 and the SUL3 are selected as the candidate resources.

The terminal selects the first SUL used for random access from the plurality of SULs based on a load corresponding to each of the at least two second SULs.

First, the terminal compares loads corresponding to the plurality of second SULs.

If the access control parameter value q of the SUL2 is greater than the access control parameter value w of the SUL3, it indicates that a load of the SUL2 is lighter than a load of the SUL3, and the terminal determines that the SUL2 corresponding to the lighter load is the first SUL used for random access.

Then, the terminal selects the first SUL from the plurality of second SULs, where the first SUL is an SUL with the lightest load in the plurality of second SULs.

For example, the terminal selects the SUL2 from the SUL2 and the SUL3 as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the first SUL used for random access from the plurality of second SULs based on the load corresponding to each second SUL, and selects the first SUL used for random access from the plurality of SULs based on the channel quality threshold and the load of each SUL. In this way, it can be ensured that a random access resource with a good channel quality is selected, and the load of each SUL is balanced. As a result, random access congestion can be avoided.

Example combination 3 is the combination of the foregoing Example 1 and Example 4. In this combination, the first parameter information is the channel quality threshold, and the second parameter information is the quantity of available resources.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3. In this example, the available resource may be an available uplink slot resource, or may be an available RACH resource. In this example, the quantity of available resources is described by using a quantity of available uplink slot resources as an example.

A quantity of available slot resources of the SUL1 is a quantity a, a quantity of available slot resources of the SUL2 is a quantity b, and a quantity of available slot resources of the SUL3 is a quantity c.

The terminal selects at least two second SULs from the plurality of SULs as the candidate resources based on a channel quality threshold corresponding to each SUL.

First, the terminal receives the downlink signal, and determines the first information value based on the downlink signal. The first information value represents a current channel quality. For example, the first information value is a current RSRP value.

Then, for each SUL, the terminal compares the first information value (the current RSRP value) with an RSRP threshold corresponding to each SUL. The terminal compares the current RSRP value with the RSRP threshold 1, the RSRP threshold 2, and the RSRP threshold 3.

For example, when the first information value is less than the RSRP threshold 2 and greater than the RSRP threshold 3, the terminal selects two second SULs from the three SULs as the candidate resources, for example, the SUL2 and the SUL3 are selected as the candidate resources.

The terminal selects the first SUL used for random access from the plurality of SULs based on a quantity of available resources corresponding to each of the at least two second SULs.

First, the terminal compares quantities of available slot resources corresponding to the plurality second SULs.

For example, the quantity of available slot resources of the SUL2 (the quantity b) is greater than the quantity of available slot resources of the SUL3 (the quantity c).

Then, the terminal determines that an SUL corresponding to a largest value in the plurality of quantities of available slot resources is the first SUL used for random access.

For example, the terminal selects the SUL2 as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the first SUL used for random access from the plurality of second SULs based on the quantity of available resources corresponding to each second SUL, and selects the first SUL used for random access from the plurality of SULs based on the channel quality threshold and the quantity of available resources of each SUL. In this way, it is ensured that an uplink resource with a good channel quality is selected for access, thereby improving a random access success rate and reducing signal interference between terminals that select the first SUL for random access in a cell.

Example combination 4 is the combination of the foregoing Example 1 and Example 5. In this combination, the first parameter information is the channel quality threshold, and the second parameter information is the slot position of the available RACH resource.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3.

The terminal selects at least two second SULs from the plurality of SULs as the candidate resources based on a channel quality threshold corresponding to each SUL.

First, the terminal receives the downlink signal, and determines the first information value based on the downlink signal. The first information value represents a current channel quality. For example, the first information value is a current RSRP value.

Then, for each SUL, the terminal compares the first information value (the current RSRP value) with an RSRP threshold corresponding to each SUL. The terminal compares the current RSRP value with the RSRP threshold 1, the RSRP threshold 2, and the RSRP threshold 3.

For example, when the first information value is less than the RSRP threshold 2 and greater than the RSRP threshold 3, the terminal selects two second SULs from the three SULs as the candidate resources, for example, the SUL2 and the SUL3 are selected as the candidate resources.

The terminal selects the first SUL used for random access from the plurality of SULs based on a slot position of an available RACH resource corresponding to each of the at least two second SULs.

First, the terminal determines a first time unit that has a random access requirement (or that is to initiate random access).

For example, the first time unit is a tth slot.

Then, the terminal selects an SUL corresponding to an earliest first slot position after the first time unit as the first SUL.

After the first time unit, a slot position of an earliest available RACH resource in the SUL2 is a (t+4)th slot position, and a slot position of an earliest available RACH resource in the SUL3 is a (t+6)th slot position.

The terminal selects the SUL2 corresponding to the (t+4)th slot position as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the first SUL used for random access from the plurality of second SULs based on the slot position of the available RACH resource corresponding to each second SUL, and selects the first SUL used for random access from the plurality of SULs based on the channel quality threshold and the slot position of an earliest available RACH resource of each SUL. In this way, it is ensured that an uplink resource with a good channel quality is selected for access, thereby improving a random access success rate and reducing a random access delay.

Example combination 5 is the combination of the foregoing Example 1 and Example 6. In this combination, the first parameter information is the channel quality threshold, and the second parameter information is the band in which the SUL is located.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3. A band in which the SUL1 is located is a band d, a band in which the SUL2 is located is a band e, and a band in which the SUL3 is located is a band f.

The terminal selects at least two second SULs from the plurality of SULs as the candidate resources based on a channel quality threshold corresponding to each SUL.

First, the terminal receives the downlink signal, and determines the first information value based on the downlink signal. The first information value represents a current channel quality. For example, the first information value is a current RSRP value.

Then, for each SUL, the terminal compares the first information value (the current RSRP value) with an RSRP threshold corresponding to each SUL. The terminal compares the current RSRP value with the RSRP threshold 1, the RSRP threshold 2, and the RSRP threshold 3.

For example, when the first information value is less than the RSRP threshold 2 and greater than the RSRP threshold 3, the terminal selects two second SULs from the three SULs as the candidate resources, for example, the SUL2 and the SUL3 are selected as the candidate resources.

The terminal selects the first SUL used for random access from the plurality of SULs based on a band in which each of the at least two second SULs is located.

First, for each second SUL, the terminal determines a maximum transmit power of the terminal device based on the band in which each second SUL is located.

The terminal determines the maximum transmit power of the terminal device based on the band d in which the SUL1 is located. The terminal may determine the maximum transmit power by querying a table indicating correspondences between bands and maximum transmit powers.

For example, the terminal determines, based on the correspondences between bands and maximum transmit powers, a maximum transmit power 2 corresponding to the band e in which the SUL2 is located, and a maximum transmit power 3 corresponding to the band f in which the SUL3 is located.

Then, the terminal compares values of the plurality of maximum transmit powers corresponding to the plurality of second SULs.

For example, the maximum transmit power 2 is greater than the maximum transmit power 3.

Then, the terminal determines the first SUL based on the maximum transmit powers, where the first SUL is an SUL corresponding to a largest value in the plurality of maximum transmit powers.

For example, a largest value of the maximum transmit power 2 and the maximum transmit power 3 is the maximum transmit power 2. The terminal selects the SUL2 corresponding to the maximum transmit power 2 as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the first SUL used for random access from the plurality of second SULs based on the maximum transmit power of the terminal device corresponding to each second SUL, and selects the first SUL used for random access from the plurality of SULs based on the channel quality threshold and the maximum transmit power of the terminal device of each SUL. To be specific, it is ensured that an uplink resource with a good channel quality is selected for access, and that the terminal device can perform random access at the maximum transmit power to ensure signal strength of a signal sent by the terminal device. This improves a random access success rate.

Example combination 6 is the combination of the foregoing Example 1, Example 3, and Example 4. In this combination, the first parameter information is the channel quality threshold, the second parameter information includes the load, and the third parameter information is the quantity of available resources.

For example, the network device configures three SULs: an SUL1, an SUL2, and an SUL3. The SUL1 corresponds to an RSRP threshold 1, the SUL2 corresponds to an RSRP threshold 2, and the SUL3 corresponds to an RSRP threshold 3, where the RSRP threshold 1>the RSRP threshold 2>the RSRP threshold 3. The SUL1 corresponds to an access control parameter value p (for example, 0.4), the SUL2 corresponds to an access control parameter value q (for example, 0.4), and the SUL3 corresponds to an access control parameter value w (for example, 0.2), where the access control parameter value p>the access control parameter value q>the access control parameter value w. A smaller access control parameter value indicates a heavier current SUL load, and a larger access control parameter value indicates a lighter current SUL load. In this example, the quantity of available resources is described by using a quantity of available uplink slot resources as an example. A quantity of available slot resources of the SUL1 is a quantity a, a quantity of available slot resources of the SUL2 is a quantity b, and a quantity of available slot resources of the SUL3 is a quantity c.

The terminal selects at least two second SULs from the plurality of SULs as the candidate resources based on first parameter information (for example, a channel quality threshold) corresponding to each SUL.

First, the terminal receives the downlink signal, and determines the first information value based on the downlink signal. The first information value represents a current channel quality. For example, the first information value is a current RSRP value.

Then, for each SUL, the terminal compares the first information value (the current RSRP value) with an RSRP threshold corresponding to each SUL. The terminal compares the current RSRP value with the RSRP threshold 1, the RSRP threshold 2, and the RSRP threshold 3.

For example, when the first information value is less than the threshold 1 and greater than the threshold 2, the terminal can perform access by using the SUL1, the SUL2, or the SUL3. In other words, the second SULs are the SUL1, the SUL2, and the SUL3, or the SUL1, the SUL2, and the SUL3 are the candidate resources.

The terminal selects a third SUL from the plurality of SULs based on second parameter information (for example, a load) corresponding to each of the at least two second SULs.

First, the terminal compares loads corresponding to the plurality of second SULs.

The access control parameter value p of the SUL1 is equal to the access control parameter value q of the SUL2, the access control parameter value q of the SUL2 is greater than the access control parameter value w of the SUL3, and loads of the SUL1 and the SUL2 are lighter than that of SUL3.

Then, the terminal selects the third SUL from the plurality of second SULs, where the third SUL is an SUL with a lightest load in the plurality of second SULs.

For example, the terminal determines the SUL1 and SUL2 with the lighter loads as third SULs.

The terminal selects the first SUL used for random access from the plurality of third SULs based on the third parameter information (for example, a quantity of available uplink slot resources).

First, the terminal compares quantities of available slot resources corresponding to the plurality of third SULs.

For example, the quantity of available slot resources of the SUL1 (the quantity a) is greater than the quantity of available slot resources of the SUL2 (the quantity b).

Then, the terminal determines that an SUL corresponding to a largest value in the plurality of quantities of available slot resources is the first SUL used for random access.

For example, the terminal selects the SUL1 as the first SUL used for random access.

In this example, the plurality of SULs are configured in one cell, and the plurality of SULs are used to improve uplink coverage of the cell. The terminal may first select the plurality of second SULs based on the current channel quality and the channel quality threshold corresponding to each SUL. Then, the terminal may further select the third SULs from the plurality of second SULs based on the load of each second SUL, and selects the first SUL used for random access from the plurality of third SULs based on the quantity of available slot resources corresponding to each third SUL. The first SUL used for random access is selected from the plurality of SULs based on the channel quality threshold, the load, and the quantity of available slot resources of each SUL. In this way, it is ensured that an uplink resource with a good channel quality is selected. A load of the uplink resource is the lightest. In this case, SUL loads can be balanced. In addition, signal interference between terminals that select the first SUL for random access in a cell can be reduced.

Example combination 7 is the combination of the foregoing Example 2 and Example 3. In this combination, the first parameter information is the priority, and the second parameter information is the load.

For example, the network device configures three SULs: an SUL1, an SUL2, and an SUL3. The SUL1 corresponds to a first priority, the SUL2 corresponds to the first priority, the SUL3 corresponds to a second priority, and the first priority is higher than the second priority. The SUL1 corresponds to an access control parameter value p (for example, 0.4), the SUL2 corresponds to an access control parameter value q (for example, 0.3), and the SUL3 corresponds to an access control parameter value w (for example, 0.2).

The terminal selects at least two second SULs from the plurality of SULs as the candidate resources based on a priority corresponding to each SUL.

First, the terminal compares priorities corresponding to the plurality of SULs.

The priorities corresponding to the SUL1 and the SUL2 are the same, and the priorities corresponding to the SUL1 and the SUL2 are higher than the priority corresponding to the SUL3.

The terminal selects at least two second SULs from the plurality of SULs as the candidate resources based on the priorities corresponding to the plurality of SULs. The second SUL is an SUL with a high priority in the plurality of SULs.

For example, the terminal selects the SUL1 and the SUL2 as the second SULs.

The terminal selects, based on a load of each of the plurality of second SULs, the first SUL used for random access.

First, the terminal compares loads of the plurality of second SULs.

For example, if the access control parameter value p corresponding to the SUL1 (for example, 0.4) is greater than the access control parameter value q corresponding to the SUL2 (for example, 0.3), it indicates that a load of the SUL1 is lighter than a load of the SUL2.

The terminal selects an SUL corresponding to a lightest load as the first SUL used for random access.

For example, the terminal selects the SUL1 as the first SUL used for random access.

In this example, the plurality of SULs are configured in one cell, and the plurality of SULs are used to improve uplink coverage of the cell. The terminal may first select the plurality of second SULs based on the priorities corresponding to each SUL, and then the terminal may further select the first SUL used for random access from the plurality of second SULs based on the load of each second SUL. The first SUL used for random access is selected from the plurality of SULs based on the priority and the load of each SUL.

It should be noted that the foregoing seven combinations are merely examples for description, and other combinations based on the foregoing Example 1 to Example 6 also fall within the coverage of this application. For example, other combinations include combinations of Example 2 and the other five examples. To be specific, the first parameter information is the SUL load, and the second parameter information includes at least one piece of parameter information of the channel quality threshold, the SUL priority, the quantity of available SUL resources, the slot position of the available SUL random access channel RACH resource, or that band in which the SUL is located. Combinations of Example 3 and the other five examples are included. To be specific, the first parameter information is the quantity of available SUL resources, and the second parameter information includes at least one piece of parameter information of the channel quality threshold, the SUL priority, the SUL load, the slot position of the available SUL random access channel RACH resource, and the band in which the SUL is located. A combination of Example 1, Example 4, and Example 5 and other combinations are included. For a combination that is not included in the foregoing example combinations, refer to the foregoing examples (Example 1 to Example 6). For example, if the first parameter information is the priority, and the second parameter information is the slot position of the available RACH resource, refer to Example 2 and Example 4. Details are not described herein.

An embodiment of this application further provides another embodiment of a random access method. A difference between this embodiment and the embodiment corresponding to FIG. 4 is that a terminal device does not need to select a first SUL from a plurality of SULs based on configuration information, but may directly select the first SUL from the plurality of SULs through equiprobability-based random selection in this embodiment.

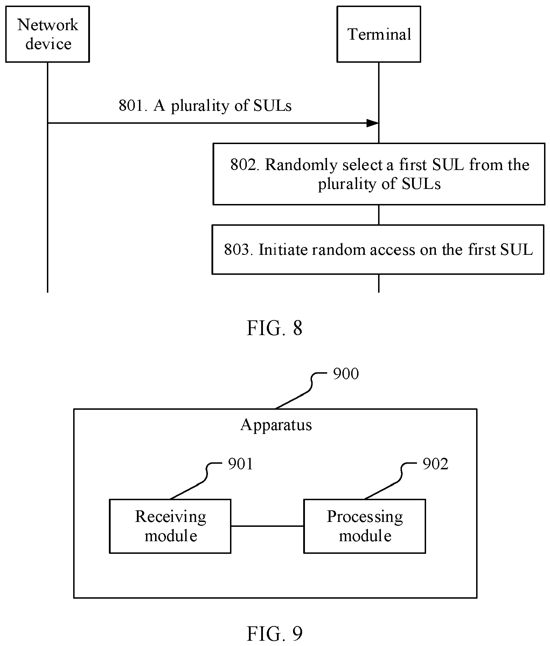

Refer to FIG. 8. An embodiment of this application provides a random access method. The method includes the following steps.

Step 801. A terminal receives first information of a plurality of SULs sent by a network device.

The network device configures a plurality of SULs, and may broadcast the first information of the plurality of SULs by using a broadcast system message. For descriptions of the first information, refer to step 401 in the embodiment corresponding to FIG. 4. Details are not described herein again.

Step 802. The terminal device randomly selects the first SUL from the plurality of SULs.

A specific manner of equiprobability-based random selection may be as follows.

The terminal generates a random number, and determines a random number threshold range based on a quantity of SULs.

The random number is a random number from 0 to 1. Optionally, the terminal may use a part or all of a UE ID as a seed for random number generation, and further generate the random number by using a random number generation algorithm and the seed, for example, a 5G-globally unique temporary UE identity (globally unique temporary UE identity, GUTI), a 5G-TMSI (a shortened form of the 5G-GUTI), or a 5G-S-TMSI (a shortened form of the 5G-GUTI) of the UE. Because the UE ID is unique, it can be ensured that random numbers generated by different terminals at a same moment are different. Optionally, the terminal may use a part or all of the UE ID and a moment at which the random number is generated as the seed for random number generation. This can ensure that random numbers generated by different terminals at a same moment are different, and random numbers generated by a same terminal at different moments are different.

For example, the network device configures k SULs, and the terminal may evenly divide (0, 1) into k parts based on a quantity of the SULs. For example, when the quantity of the SULs is 2, the terminal determines that a random number threshold range corresponding to an SUL1 is (0, 0.5], and a random number threshold range corresponding to an SUL2 is (0.5, 1]. For example, a random number generated by the terminal is 0.2.

The terminal determines, based on the random number and a random number threshold range corresponding to each SUL, the first SUL used for random access.

If the random number falls within the random number threshold range corresponding to the SUL1, the terminal determines that the SUL1 is the first SUL used for random access. If the random number falls within a random number threshold range corresponding to the SUL2, the terminal determines that the SUL2 is the first SUL used for random access.

For example, when the random number is 0.2, 0.2 falls within the random number threshold range corresponding to the SUL1, and the terminal determines that the SUL1 is the first SUL.

Step 803. Initiate random access on the first SUL.

In this example, a plurality of SULs are configured in one cell, and the plurality of SULs are used to improve uplink coverage of the cell. The terminal may select the first SUL used for random access from the plurality of SULs through equiprobability-based random selection.

For this step, 2-step access or 4-step access is selected based on a current channel quality. For descriptions of this step, refer to step 403 in the embodiment corresponding to FIG. 4. Details are not described herein again.

It should be noted that the manner of performing equiprobability-based random selection described in this embodiment may be combined with the examples or example combinations in the embodiment corresponding to FIG. 4. After the terminal selects at least two SULs based on one piece of parameter information, one SUL used for random access may be further selected from the at least two SULs through equiprobability-based random selection. Alternatively, in an example combination of a plurality of pieces of parameter information, the configuration information includes r pieces of parameter information (for example, r is 2), for example, the first parameter information is a channel quality threshold, and the second parameter information is a priority. In this case, when the terminal device still cannot select one SUL based on the two pieces of parameter information, the terminal device can select, through equiprobability-based random selection described in this embodiment, one SUL from the plurality of SULs as the first SUL used for random access.

For example, in Example 1 in the embodiment corresponding to FIG. 4, when the first information value is less than the threshold 1 and greater than the threshold 2, the terminal can perform access through the SUL1, the SUL2, or the SUL3, and the terminal can select one SUL as the first SUL used for random access from the SUL1, the SUL2, or the SUL3 through equiprobability-based random selection.

The terminal generates a random number, and determines the threshold range corresponding to each SUL. For example, a threshold range corresponding to the SUL1 is (0, 0.33], a threshold range corresponding to the SUL2 is (0.33, 0.66], and a threshold range corresponding to the SUL3 is (0.66, 1].

For example, a random number generated by the terminal is 0.4.

The terminal determines, based on the random number and the random number threshold range corresponding to each SUL, the first SUL used for random access.

For example, when the random number is 0.4, the terminal determines that the SUL2 is the first SUL used for random access because 0.4 falls within the random number threshold range corresponding to the SUL2.

For the foregoing random access method in this application, this application provides an embodiment of an apparatus to which the method is applied. Refer to FIG. 9. An embodiment of an apparatus 900 includes:
a receiving module 901, configured to receive configuration information of a plurality of secondary uplink SUL carriers and that is sent by a network device, and
a processing module 902, configured to select a first SUL used for random access from the plurality of SULs based on the configuration information received by the receiving module 901.

The processing module 902 is further configured to initiate random access on the first SUL determined by the processing module 902.

Specifically, the receiving module 901 is configured to perform step 401 in the embodiment corresponding to FIG. 4 and step 801 in the embodiment corresponding to FIG. 8. The processing module 902 is configured to perform step 402 and step 403 in the embodiment corresponding to FIG. 4, and step 802 and step 803 in the embodiment corresponding to FIG. 8.

In an implementation, the apparatus 900 may be the terminal device in the method embodiment. Corresponding units included in the apparatus 900 are configured to perform corresponding operations and/or processing performed by the terminal device in the examples.

For example, the receiving module 901 is a transceiver, and the processing module 902 may be a processor. The transceiver has a sending and/or receiving function, and the transceiver may be replaced with a receiver and/or a transmitter.

In another implementation, the apparatus 900 may be a chip or an integrated circuit. In this case, the receiving module 901 may be a communication interface, and the processing module 902 may be a logic circuit.

Optionally, the communication interface may be an input/output interface or a transceiver circuit. The input/output interface may include an input interface and an output interface. The transceiver circuit may include an input interface circuit and an output interface circuit.

In an implementation, the processing module 902 may be a processing apparatus, and some or all functions of the processing apparatus may be implemented by using software.

Optionally, some or all functions of the processing apparatus may be implemented by using software. In this case, the processing apparatus may include a memory and a processor. The memory is configured to store a computer program, and the processor reads and executes the computer program stored in the memory, to perform corresponding processing and/or steps in any method embodiment.

Optionally, the processing apparatus may only include the processor. The memory configured to store the computer program is located outside the processing apparatus, and the processor is connected to the memory through a circuit/wire, to read and execute the computer program stored in the memory.

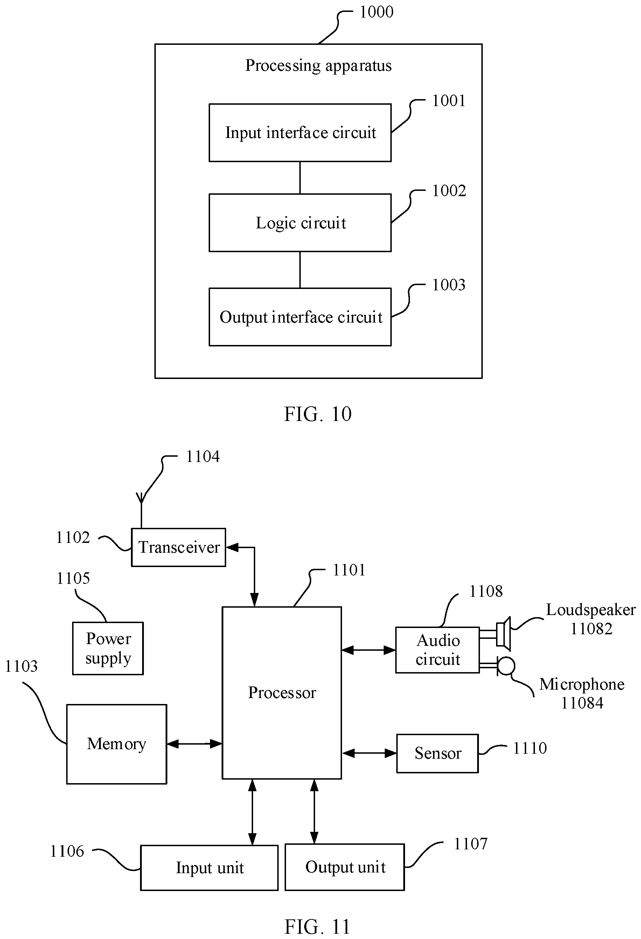

Optionally, some or all functions of the processing apparatus may be implemented by using hardware. In this case, the processing apparatus may include an input interface circuit, a logic circuit, and an output interface circuit, as shown in FIG. 10.

Refer to FIG. 10. FIG. 10 is a schematic diagram of a structure of a processing apparatus 1000 according to this application. An input interface circuit 1001 is configured to receive configuration information of a plurality of SULs. The logic circuit 1002 is configured to select a first SUL used for random access from the plurality of SULs based on the received configuration information of the plurality of SULs, and initiate random access on the first SUL. Optionally, an output interface circuit 1003 is configured to select a preamble sequence on the first SUL and send the preamble sequence to a network device, to initiate random access.

Refer to FIG. 11. FIG. 11 is a schematic diagram of a structure of a terminal device according to an embodiment of this application. The terminal device includes a processor 1101, a transceiver 1102, and a memory 1103. The processor 1101, the transceiver 1102, and the memory 1103 may communicate with each other through an internal connection path, to transmit a control signal and/or a data signal. The memory 1103 is configured to store a computer program. The processor 1101 is configured to invoke the computer program from the memory 1103 and run the computer program, to control the transceiver 1102 to receive and send a signal. Optionally, the terminal device may further include an antenna 1104. The transceiver 1102 transmits or receives a radio signal through the antenna.

Optionally, the processor 1101 and the memory 1103 may be integrated into one processing apparatus. The processor 1101 is configured to execute program code stored in the memory 1103 to implement the foregoing functions.

Optionally, the memory 1103 may alternatively be integrated into the processor 1101. Alternatively, the memory 1103 is independent of the processor 1101, that is, located outside the processor 1101.

The processor 1101 may be configured to perform actions that are internally implemented by the terminal device and that are described in the foregoing method embodiments. The transceiver 1102 may be configured to perform a receiving or sending action performed by the terminal device, and the memory 1103 is configured to implement a storage function. For example, processing and/or operations performed by the receiving module 901 shown in FIG. 9 may be implemented by the transceiver 1102. Processing and/or operations performed by the processing module 902 may be implemented by the processor 1101 shown in FIG. 11. For details, reference may be made to the detailed descriptions of the method embodiments. Details are not described herein again.

Optionally, the terminal device may further include a power supply 1105, configured to supply power to various components or circuits in the terminal device.

In addition, to improve functions of the terminal device, the terminal device may further include one or more of an input unit 1106, a display unit 1107, an audio circuit 1108, and a sensor 1110, and the like. The audio circuit may further include a loudspeaker 11082, a microphone 11084, and the like.

This application further provides a computer-readable storage medium. The computer-readable storage medium stores a computer program. When the computer program is executed by a computer, the computer is enabled to perform an operation and/or processing performed by a terminal device in any method embodiment.

This application further provides a computer program product. The computer program product includes computer program code. When the computer program code is run on a computer, the computer performs an operation and/or processing performed by a terminal device in any method embodiment.

This application further provides a chip including a processor. A memory configured to store a computer program is independent of the chip. The processor is configured to execute the computer program stored in the memory, to perform operations and/or processing performed by the terminal device in any method embodiment.

Further, the chip may further include a memory and/or a communication interface. The communication interface may be an input/output interface, an input/output circuit, or the like.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

A person skilled in the art may understand that various numbers such as "first" and "second" in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as "first" and "second" in this application are merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, and B may be determined based on A. However, it should be further understood that determining B according to A does not mean that B is determined only according to A, and B may be alternatively determined according to A and/or other information.

In another possible design, when the apparatus is a chip in a terminal, the chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the terminal performs the wireless communication method according to any one of the implementations of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM) or another type of static storage device that can store static information and instructions, or a random access memory (random access memory, RAM).

Any processor mentioned above may be a general-purpose central processing unit (CPU), a microprocessor, an application-specific integrated circuit (application-specific integrated circuit, ASIC), or one or more integrated circuits configured to control program execution in the wireless communication method in the first aspect.

It may be clearly understood by a person skilled in the art that, for the purpose of convenient and brief description, for a detailed working process of the foregoing system, apparatus, and unit, reference should be made to the corresponding process in the foregoing method embodiment, and details are not described herein again.

In the several embodiments provided in this application, it should be understood that the disclosed system, apparatus, and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. The parts displayed as units may or may not be physical units, in other words, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to the conventional art, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A random access method, wherein the method comprises:
receiving (401) configuration information sent by a network device, wherein the configuration information comprises information about a plurality of supplementary uplink ,SUL, carriers;
selecting (402) a first SUL used for random access from the plurality of SULs based on the configuration information; and
initiating (403) random access on the first SUL,
**characterized in that** the configuration information comprises first parameter information and second parameter information; and the selecting (402) a first SUL used for random access from the plurality of SULs based on the configuration information comprises:
determining M second SULs based on the first parameter information, wherein the first parameter information is at least one of the channel quality threshold, the SUL priority, the SUL load, the quantity of available SUL resources, the slot position of the available SUL random access channel RACH resource, and the band in which the SUL is located, and M is an integer greater than or equal to 1; and
if M is equal to 1, determining that the second SUL is the first SUL; or
if M is greater than 1, determining the first SUL used for random access from the M second SULs based on the second parameter information, wherein the second parameter information comprises at least one piece of parameter information of the channel quality threshold, the SUL priority, the SUL load, the quantity of available SUL resources, the slot position of the available SUL random access channel RACH resource, and the band in which the SUL is located, and the first parameter information and the second parameter information are different.

2. The method according to claim 1, wherein the configuration information comprises at least one piece of parameter information of a channel quality threshold, an SUL priority, an SUL load, a quantity of available SUL resources, a slot position of an available SUL random access channel RACH resource, and a band in which the SUL is located.

3. The method according to claim 1 or 2, wherein the first parameter information comprises a first channel quality threshold corresponding to each of the plurality of SULs, and the first channel quality threshold is used by a terminal device to determine whether an SUL corresponding to the first channel quality threshold can be used for random access;
the determining M second SULs based on the first parameter information comprises:
receiving a downlink signal, and determining a first information value based on the downlink signal, wherein the first information value represents a channel quality; and
determining the M second SULs based on the first information value and the first channel quality threshold that corresponds to each SUL; and
if M is greater than 1, the second parameter information comprises at least one piece of parameter information of the SUL priority, the SUL load, the quantity of available SUL resources, the slot position of the available SUL random access channel RACH resource, and the band in which the SUL is located.

4. The method according to claim 1 or 2, wherein the first parameter information comprises a priority of each of the plurality of SULs;
the determining M second SULs based on the first parameter information comprises:
determining the M second SULs based on the priority of each of the plurality of SULs, wherein the second SUL is an SUL with a highest priority in the plurality of SULs; and
if M is greater than 1, the second parameter information comprises at least one piece of parameter information of the channel quality threshold, the SUL load, the quantity of available SUL resources, the slot position of the available SUL random access channel RACH resource, and the band in which the SUL is located.

5. The method according to claim 1 or 2, wherein the first parameter information comprises a load of each of the plurality of SULs;
the determining M second SULs based on the first parameter information comprises:
determining the M second SULs based on the load of each of the plurality of SULs, wherein the second SUL is an SUL with a lightest load in a plurality of loads; and
if M is greater than 1, the second parameter information comprises at least one piece of parameter information of the channel quality threshold, the SUL priority, the quantity of available SUL resources, the slot position of the available SUL random access channel RACH resource, and the band in which the SUL is located.

6. The method according to claim 1 or 2, wherein the first parameter information comprises a quantity of available resources of each of the plurality of SULs or a ratio of the available resources, and the ratio of the available resources indicates the quantity of available resources;
the determining M second SULs based on the first parameter information comprises:
determining the M second SULs based on the quantity of available resources of each of the plurality of SULs, wherein the second SUL is an SUL corresponding to a largest quantity in a plurality of quantities of available resources; and
if M is greater than 1, the second parameter information comprises at least one piece of parameter information of the channel quality threshold, the SUL priority, the SUL load, the slot position of the available SUL random access channel RACH resource, and the band in which the SUL is located.

7. The method according to claim 6, wherein the available resources are available uplink slot resources or available RACH resources.

8. The method according to claim 1 or 2, wherein the first parameter information comprises a slot position of an available RACH resource of each of the plurality of SULs;
the determining M second SULs based on the first parameter information comprises:
determining a first time unit that has a random access requirement; and
selecting SULs corresponding to earliest first slot positions after the first time unit as the M second SULs, wherein slot positions of the plurality of available RACH resources comprise the first slot position; and
if M is greater than 1, the second parameter information comprises at least one piece of parameter information of the channel quality threshold, the SUL priority, the SUL load, the quantity of available SUL resources, and the band in which the SUL is located.

9. The method according to claim 1 or 2, wherein the first parameter information comprises a band in which each of the plurality of SULs is located;
the determining M second SULs based on the first parameter information comprises:
determining a maximum transmit power of a terminal device for each SUL based on the band in which the SUL is located; and
determining the M second SULs based on maximum transmit powers of the terminal device, wherein the second SUL is an SUL corresponding to a largest value of the plurality of maximum transmit powers; and
if M is greater than 1, the second parameter information comprises at least one piece of parameter information of the channel quality threshold, the SUL priority, the SUL load, the quantity of available SUL resources, or the slot position of the available SUL random access channel RACH resource.

10. The method according to claim 1 or 2, wherein the configuration information further comprises a second channel quality threshold; and the method further comprises:
receiving a downlink signal, and determining a first information value based on the downlink signal, wherein the first information value represents a channel quality; and
when the first information value is greater than the second channel quality threshold, performing two steps to access the first SUL;
or
when the first information value is less than or equal to the second channel quality threshold, performing four steps to access the first SUL.

11. The method according to any one of claims 1 to 10, wherein the configuration information is information comprised in a system message broadcast by the network device.

12. A terminal, comprising a processor (1101) and a transceiver (1102) connected to the processor (1101), wherein the processor (1101) is configured to read instructions to perform the method according to any one of claims 1 to 11.

13. A computer-readable medium, wherein the computer-readable storage medium stores a computer program, and when the computer program is run by a computer, the computer is enabled to perform the method according to any one of claims 1 to 11.

14. A chip comprising a processor and a communication interface, wherein the processor is configured to read instructions to perform the method according to any one of claims 1 to 11.

## Patentansprüche

1. Direktzugriffsverfahren, wobei das Verfahren Folgendes umfasst:
Empfangen (401) von durch ein Netzwerkgerät gesendeten Konfigurationsinformationen, wobei die Konfigurationsinformationen Informationen über eine Mehrzahl von zusätzlichen Aufwärtsstrahl-, SUL-, Trägern umfassen;
Auswählen (402) eines für einen Direktzugriff verwendeten ersten SUL aus der Mehrzahl von SULs basierend auf den Konfigurationsinformationen; und
Initiieren (403) eines Direktzugriffs auf dem ersten SUL,
**dadurch gekennzeichnet, dass** die Konfigurationsinformationen erste Parameterinformationen und zweite Parameterinformationen umfassen; und das Auswählen (402) eines für einen Direktzugriff verwendeten ersten SUL aus der Mehrzahl von SULs basierend auf den Konfigurationsinformationen Folgendes umfasst:
Bestimmen von M zweiten SULs basierend auf den ersten Parameterinformationen, wobei die ersten Parameterinformationen mindestens eines des Kanalqualitätsschwellenwerts, der SUL-Priorität, der SUL-Last, der Anzahl an verfügbaren SUL-Ressourcen, der Schlitzposition der verfügbaren SUL-Direktzugriffskanal-RACH-Ressource und des Bands, in dem sich der SUL befindet, sind, und M eine Ganzzahl größer als oder gleich 1 ist; und
wenn M gleich 1 ist, Bestimmen, dass der zweite SUL der erste SUL ist; oder
wenn M größer als 1 ist, Bestimmen des für einen Direktzugriff verwendeten ersten SUL aus den M zweiten SULs basierend auf den zweiten Parameterinformationen, wobei die zweiten Parameterinformationen mindestens einen Teil von Parameterinformationen des Kanalqualitätsschwellenwerts, der SUL-Priorität, der SUL-Last, der Anzahl an verfügbaren SUL-Ressourcen, der Schlitzposition der verfügbaren SUL-Direktzugriffskanal-RACH-Ressource und des Bands, in dem sich der SUL befindet, umfassen, und sich die ersten Parameterinformationen und die zweiten Parameterinformationen unterscheiden.

2. Verfahren nach Anspruch 1, wobei die Konfigurationsinformationen mindestens einen Teil von Parameterinformationen eines Kanalqualitätsschwellenwerts, einer SUL-Priorität, einer SUL-Last, einer Anzahl an verfügbaren SUL-Ressourcen, einer Schlitzposition einer verfügbaren SUL-Direktzugriffskanal-RACH-Ressource und eines Bands, in dem sich der SUL befindet, umfassen.

3. Verfahren nach Anspruch 1 oder 2, wobei die ersten Parameterinformationen einen ersten Kanalqualitätsschwellenwert umfassen, der jedem der Mehrzahl von SULs entspricht, und der erste Kanalqualitätsschwellenwert durch ein Endgerät verwendet wird, um zu bestimmen, ob ein SUL, der dem ersten Kanalqualitätsschwellenwert entspricht, für einen Direktzugriff verwendet werden kann;
wobei das Bestimmen von M zweiten SULs basierend auf den ersten Parameterinformationen Folgendes umfasst:
Empfangen eines Abwärtsstrahlsignals, und Bestimmen eines ersten Informationswerts basierend auf dem Abwärtsstrahlsignal, wobei der erste Informationswert eine Kanalqualität darstellt; und
Bestimmen der M zweiten SULs basierend auf dem ersten Informationswert und dem ersten Kanalqualitätsschwellenwert, der jedem SUL entspricht; und
wobei, wenn M größer als 1 ist, die zweiten Parameterinformationen mindestens einen Teil von Parameterinformationen der SUL-Priorität, der SUL-Last, der Anzahl an verfügbaren SUL-Ressourcen, der Schlitzposition der verfügbaren SUL-Direktzugriffskanal-RACH-Ressource und des Bands, in dem sich der SUL befindet, umfassen.

4. Verfahren nach Anspruch 1 oder 2, wobei die ersten Parameterinformationen eine Priorität jedes der Mehrzahl von SULs umfassen;
wobei das Bestimmen von M zweiten SULs basierend auf den ersten Parameterinformationen Folgendes umfasst:
Bestimmen der M zweiten SULs basierend auf der Priorität jedes der Mehrzahl von SULs, wobei der zweite SUL ein SUL mit einer höchsten Priorität in der Mehrzahl von SULs ist; und
wobei, wenn M größer als 1 ist, die zweiten Parameterinformationen mindestens einen Teil von Parameterinformationen des Kanalqualitätsschwellenwerts, der SUL-Last, der Anzahl an verfügbaren SUL-Ressourcen, der Schlitzposition der verfügbaren SUL-Direktzugriffskanal-RACH-Ressource und des Bands, in dem sich der SUL befindet, umfassen.

5. Verfahren nach Anspruch 1 oder 2, wobei die ersten Parameterinformationen eine Last jedes der Mehrzahl von SULs umfassen;
wobei das Bestimmen von M zweiten SULs basierend auf den ersten Parameterinformationen Folgendes umfasst:
Bestimmen der M zweiten SULs basierend auf der Last jedes der Mehrzahl von SULs, wobei der zweite SUL ein SUL mit einer geringsten Last in einer Mehrzahl von Lasten ist; und
wobei, wenn M größer als 1 ist, die zweiten Parameterinformationen mindestens einen Teil von Parameterinformationen des Kanalqualitätsschwellenwerts, der SUL-Priorität, der Anzahl an verfügbaren SUL-Ressourcen, der Schlitzposition der verfügbaren SUL-Direktzugriffskanal-RACH-Ressource und des Bands, in dem sich der SUL befindet, umfassen.

6. Verfahren nach Anspruch 1 oder 2, wobei die ersten Parameterinformationen eine Anzahl an verfügbaren Ressourcen jedes der Mehrzahl von SULs oder ein Verhältnis der verfügbaren Ressourcen umfassen, und das Verhältnis der verfügbaren Ressourcen die Anzahl an verfügbaren Ressourcen anzeigt;
wobei das Bestimmen von M zweiten SULs basierend auf den ersten Parameterinformationen Folgendes umfasst:
Bestimmen der M zweiten SULs basierend auf der Anzahl an verfügbaren Ressourcen jedes der Mehrzahl von SULs, wobei der zweite SUL ein SUL ist, der einer größten Anzahl in einer Mehrzahl von Anzahlen von verfügbaren Ressourcen entspricht; und
wobei, wenn M größer als 1 ist, die zweiten Parameterinformationen mindestens einen Teil von Parameterinformationen des Kanalqualitätsschwellenwerts, der SUL-Priorität, der SUL-Last, der Schlitzposition der verfügbaren SUL-Direktzugriffskanal-RACH-Ressource und des Bands, in dem sich der SUL befindet, umfassen.

7. Verfahren nach Anspruch 6, wobei die verfügbaren Ressourcen verfügbare Aufwärtsstrahlschlitzressourcen oder verfügbare RACH-Ressourcen sind.

8. Verfahren nach Anspruch 1 oder 2, wobei die ersten Parameterinformationen eine Schlitzposition einer verfügbaren RACH-Ressource jedes der Mehrzahl von SULs umfassen;
wobei das Bestimmen von M zweiten SULs basierend auf den ersten Parameterinformationen Folgendes umfasst:
Bestimmen einer ersten Zeiteinheit, die eine Direktzugriffsanforderung aufweist; und Auswählen von SULs, die frühesten ersten Schlitzpositionen nach der ersten Zeiteinheit entsprechen, als die M zweiten SULs, wobei Schlitzpositionen der Mehrzahl von verfügbaren RACH-Ressourcen die erste Schlitzposition umfassen; und
wobei, wenn M größer als 1 ist, die zweiten Parameterinformationen mindestens einen Teil von Parameterinformationen des Kanalqualitätsschwellenwerts, der SUL-Priorität, der SUL-Last, der Anzahl an verfügbaren SUL-Ressourcen und des Bands, in dem sich der SUL befindet, umfassen.

9. Verfahren nach Anspruch 1 oder 2, wobei die ersten Parameterinformationen ein Band umfassen, in dem sich jeder der Mehrzahl von SULs befindet;
wobei das Bestimmen von M zweiten SULs basierend auf den ersten Parameterinformationen Folgendes umfasst:
Bestimmen einer maximalen Sendeleistung eines Endgeräts für jeden SUL basierend auf dem Band, in dem sich der SUL befindet; und
Bestimmen der M zweiten SULs basierend auf maximalen Sendeleistungen des Endgeräts, wobei der zweite SUL ein SUL ist, der einem größten Wert der Mehrzahl von maximalen Sendeleistungen entspricht; und
wobei, wenn M größer als 1 ist, die zweiten Parameterinformationen mindestens einen Teil von Parameterinformationen des Kanalqualitätsschwellenwerts, der SUL-Priorität, der SUL-Last, der Anzahl an verfügbaren SUL-Ressourcen oder der Schlitzposition der verfügbaren SUL-Direktzugriffskanal-RACH-Ressource umfassen.

10. Verfahren nach Anspruch 1 oder 2, wobei die Konfigurationsinformationen ferner einen zweiten Kanalqualitätsschwellenwert umfassen; und das Verfahren ferner Folgendes umfasst:
Empfangen eines Abwärtsstrahlsignals, und Bestimmen eines ersten Informationswerts basierend auf dem Abwärtsstrahlsignal, wobei der erste Informationswert eine Kanalqualität darstellt; und
wenn der erste Informationswert größer als der zweite Kanalqualitätsschwellenwert ist, Durchführen von zwei Schritten zum Zugreifen auf den ersten SUL;
oder
wenn der erste Informationswert kleiner als oder gleich dem zweiten Kanalqualitätsschwellenwert ist, Durchführen von vier Schritten zum Zugreifen auf den ersten SUL.

11. Verfahren nach einem der Ansprüche 1 bis 10, wobei die Konfigurationsinformationen Informationen sind, die in einer Systemnachricht enthalten sind, die durch das Netzwerkgerät rundgesendet wird.

12. Endgerät, umfassend einen Prozessor (1101) und einen mit dem Prozessor (1101) verbundenen Sendeempfänger (1102), wobei der Prozessor (1101) dazu konfiguriert ist, Anweisungen auszulesen, um das Verfahren nach einem der Ansprüche 1 bis 11 durchzuführen.

13. Computerlesbares Medium, wobei das computerlesbare Speichermedium ein Computerprogramm speichert, und wenn das Computerprogramm durch einen Computer ausgeführt wird, dem Computer ermöglicht wird, das Verfahren nach einem der Ansprüche 1 bis 11 durchzuführen.

14. Chip, umfassend einen Prozessor und eine Kommunikationsschnittstelle, wobei der Prozessor dazu konfiguriert ist, Anweisungen auszulesen, um das Verfahren nach einem der Ansprüche 1 bis 11 durchzuführen.

## Revendications

1. Procédé d'accès aléatoire, le procédé comprenant les étapes consistant à :
recevoir (401) une information de configuration envoyée par un dispositif de réseau, l'information de configuration comprenant une information concernant une pluralité de porteuses de liaison montante supplémentaire, SUL ;
choisir (402) une première SUL utilisée pour un accès aléatoire parmi la pluralité de SUL sur la base de l'information de configuration ; et
lancer (403) un accès aléatoire sur la première SUL,
**caractérisé en ce que** l'information de configuration comprend une première information de paramètre et une deuxième information de paramètre ; et le choix (402) d'une première SUL utilisée pour un accès aléatoire parmi la pluralité de SUL sur la base de l'information de configuration consiste à :
déterminer M deuxièmes SUL sur la base de la première information de paramètre, la première information de paramètre étant au moins un élément parmi le seuil de qualité de canal, la priorité de SUL, la charge de SUL, la quantité de ressources SUL disponibles, la position de créneau de la ressource de canal d'accès aléatoire RACH de SUL disponible, et la bande dans laquelle la SUL est située, et M est un entier supérieur ou égal à 1 ; et
si M est égal à 1, déterminer que la deuxième SUL est la première SUL ; ou
si M est supérieur à 1, déterminer la première SUL utilisée pour l'accès aléatoire parmi les M deuxièmes SUL sur la base de la deuxième information de paramètre, la deuxième information de paramètre comprenant au moins un morceau d'information de paramètre du seuil de qualité de canal, de la priorité de SUL, de la charge de SUL, de la quantité de ressources SUL disponibles, de la position de créneau de la ressource de canal d'accès aléatoire RACH de SUL disponible, et de la bande dans laquelle la SUL est située, et la première information de paramètre et la deuxième information de paramètre étant différentes.

2. Procédé selon la revendication 1, dans lequel l'information de configuration comprend au moins un morceau d'information de paramètre d'un seuil de qualité de canal, d'une priorité de SUL, d'une charge de SUL, d'une quantité de ressources SUL disponibles, d'une position de créneau d'une ressource de canal d'accès aléatoire RACH de SUL disponible, et d'une bande dans laquelle la SUL est située.

3. Procédé selon la revendication 1 ou 2, dans lequel la première information de paramètre comprend un premier seuil de qualité de canal correspondant à chaque SUL de la pluralité de SUL, et le premier seuil de qualité de canal est utilisé par un dispositif terminal pour déterminer si une SUL correspondant au premier seuil de qualité de canal peut être utilisée pour l'accès aléatoire ;
la détermination de M deuxièmes SUL sur la base de la première information de paramètre comprend les étapes consistant à :
recevoir un signal de liaison descendante et déterminer une première valeur d'information sur la base du signal de liaison descendante, la première valeur d'information représentant une qualité de canal ; et
déterminer les M deuxièmes SUL sur la base de la première valeur d'information et du premier seuil de qualité de canal qui correspond à chaque SUL ; et
si M est supérieur à 1, la deuxième information de paramètre comprend au moins un morceau d'information de paramètre de la priorité de SUL, de la charge de SUL, de la quantité de ressources SUL disponibles, de la position de créneau de la ressource de canal d'accès aléatoire RACH de SUL disponible, et de la bande dans laquelle la SUL est située.

4. Procédé selon la revendication 1 ou 2, dans lequel la première information de paramètre comprend une priorité de chaque SUL de la pluralité de SUL ;
la détermination de M deuxièmes SUL sur la base de la première information de paramètre consiste à :
déterminer les M deuxièmes SUL sur la base de la priorité de chaque SUL de la pluralité de SUL, la deuxième SUL étant une SUL ayant une priorité la plus élevée parmi la pluralité de SUL ; et
si M est supérieur à 1, la deuxième information de paramètre comprend au moins un morceau d'information de paramètre du seuil de qualité de canal, de la charge de SUL, de la quantité de ressources SUL disponibles, de la position de créneau de la ressource de canal d'accès aléatoire RACH de SUL disponible, et de la bande dans laquelle la SUL est située.

5. Procédé selon la revendication 1 ou 2, dans lequel la première information de paramètre comprend une charge de chaque SUL de la pluralité de SUL ;
la détermination de M deuxièmes SUL sur la base de la première information de paramètre consiste à :
déterminer les M deuxièmes SUL sur la base de la charge de chaque SUL de la pluralité de SUL, la deuxième SUL étant une SUL ayant une charge la plus élevée parmi une pluralité de charges ; et
si M est supérieur à 1, la deuxième information de paramètre comprend au moins un morceau d'information de paramètre du seuil de qualité de canal, de la priorité de SUL, de la quantité de ressources SUL disponibles, de la position de créneau de la ressource de canal d'accès aléatoire RACH de SUL disponible, et de la bande dans laquelle la SUL est située.

6. Procédé selon la revendication 1 ou 2, dans lequel la première information de paramètre comprend une quantité de ressources disponibles de chaque SUL de la pluralité de SUL ou un rapport des ressources disponibles, et le rapport des ressources disponibles indique la quantité de ressources disponibles ;
la détermination de M deuxièmes SUL sur la base de la première information de paramètre consiste à :
déterminer les M deuxièmes SUL sur la base de la quantité de ressources disponibles de chaque SUL de la pluralité de SUL, la deuxième SUL étant une SUL correspondant à la plus grande quantité parmi une pluralité de quantités de ressources disponibles ; et si M est supérieur à 1, la deuxième information de paramètre comprend au moins un morceau d'information de paramètre du seuil de qualité de canal, de la priorité de SUL, de la charge de SUL, de la position de créneau de la ressource de canal d'accès aléatoire RACH de SUL disponible, et de la bande dans laquelle la SUL est située.

7. Procédé selon la revendication 6, dans lequel les ressources disponibles sont des ressources de créneau de liaison montante disponibles ou des ressources RACH disponibles.

8. Procédé selon la revendication 1 ou 2, dans lequel la première information de paramètre comprend une position de créneau d'une ressource RACH disponible de chaque SUL de la pluralité de SUL ;
la détermination de M deuxièmes SUL sur la base de la première information de paramètre consiste à :
déterminer une première unité de temps qui présente une exigence d'accès aléatoire ; et
choisir les SUL correspondant aux premières positions de créneau situées juste après la première unité de temps comme M deuxièmes SUL, les positions de créneau de la pluralité de ressources RACH disponibles comprenant la première position de créneau ; et
si M est supérieur à 1, la deuxième information de paramètre comprend au moins un morceau d'information de paramètre du seuil de qualité de canal, de la priorité de SUL, de la charge de SUL, de la quantité de ressources SUL disponibles, et de la bande dans laquelle la SUL est située.

9. Procédé selon la revendication 1 ou 2, dans lequel la première information de paramètre comprend une bande dans laquelle chaque SUL de la pluralité de SUL est située ;
la détermination de M deuxièmes SUL sur la base de la première information de paramètre consiste à :
déterminer une puissance de transmission maximale d'un dispositif terminal pour chaque SUL sur la base de la bande dans laquelle la SUL est située ; et
déterminer les M deuxièmes SUL sur la base des puissances de transmission maximales du dispositif terminal, la deuxième SUL étant une SUL correspondant à une valeur la plus élevée parmi la pluralité de puissances de transmission maximales ; et
si M est supérieur à 1, la deuxième information de paramètre comprend au moins un morceau d'information de paramètre du seuil de qualité de canal, de la priorité de SUL, de la charge de SUL, de la quantité de ressources SUL disponibles, ou de la position de créneau de la ressource de canal d'accès aléatoire RACH de SUL disponible.

10. Procédé selon la revendication 1 ou 2, l'information de configuration comprenant également un deuxième seuil de qualité de canal ; et le procédé comprenant également les étapes consistant à :
recevoir un signal de liaison descendante et déterminer une première valeur d'information sur la base du signal de liaison descendante, la première valeur d'information représentant une qualité de canal ; et
lorsque la première valeur d'information est supérieure au deuxième seuil de qualité de canal, effectuer deux étapes pour accéder à la première SUL ;
ou
lorsque la première valeur d'information est inférieure ou égale au deuxième seuil de qualité de canal, effectuer quatre étapes pour accéder à la première SUL.

11. Procédé selon l'une quelconque des revendications 1 à 10, dans lequel l'information de configuration est une information comprise dans un message système diffusé par le dispositif de réseau.

12. Terminal, comprenant un processeur (1101) et un émetteur-récepteur (1102) connecté au processeur (1101), le processeur (1101) étant configuré pour lire des instructions permettant de réaliser le procédé selon l'une quelconque des revendications 1 à 11.

13. Support lisible par ordinateur, le support de stockage lisible par ordinateur servant à stocker un programme informatique, et lorsque le programme informatique est exécuté par un ordinateur, l'ordinateur est activé pour réaliser le procédé selon l'une quelconque des revendications 1 à 11.

14. Puce comprenant un processeur et une interface de communication, le processeur étant configuré pour lire des instructions permettant de réaliser le procédé selon l'une quelconque des revendications 1 à 11.
